# EUROPEAN PATENT APPLICATION

(11) **EP 1 878 496 A1**
(43) Date of publication of application: **16.01.2008**
(21) Application number: 06014681.8
(22) Date of filing: 14.07.2006
(51) Int. Cl.: B01L 3/00, C12Q 1/68, G01N 35/00

(54) **Apparatus for performing nucleic acid analysis**

(71) Applicant: Roche Diagnostics GmbH, 68305 Mannheim (DE); F. HOFFMANN-LA ROCHE AG, 4070 Basel (CH)
(72) Inventor: Sarofim, Emad, 6332 Hagendorn (CH); Elsenhans, Olivier, Dr., 5643 Sins (CH); Kopp, Martin, Dr., 6332 Hagendron (CH); Wahl, Hans-Peter, Dr., 79650 Schopfheim (DE); Savatic, Goran, 6403 Kuessnacht am Rigi (CH); Hutter, Roland Christof, 6300 Zug (CH)
(74) Representative: Jany, Peter

(57) **Abstract**

The embodiments of the present invention are directed to an automatic apparatus (55), which is designed for performing nucleic acid analysis, optionally including sample preparation, with integrated disposable sample holding and processing devices (1), which devices (1) comprise a sample to be analyzed with the apparatus (55). The apparatus (55) comprises workstations (17, 40) for receiving, holding and processing such integrated disposable devices (1), a reagents station (56) for reagents (25), transfer means (36) for performing movements of an actuator, fluid actuation means for processing the sample (32) and reagents in said disposable devices (1), temperature control means (37) for heating or cooling, detection means for measuring a property of the processed samples (32), and control means for controlling the sample (32) preparation, the handling of the disposable devices (1) and the sample analysis performed by the apparatus (55).

## Description

The invention relates to an automated apparatus for performing nucleic acid sample analysis, optionally comprising the step of sample preparation, including the polymerase chain reaction technique (PCR), by using disposable devices for holding and processing samples with the apparatus, which disposables comprise a sample to be analyzed with the apparatus, the apparatus comprising a detection station for receiving and holding said at least one disposable device, at least one reagents station for comprising at least one reagent to be used in the nucleic acid sample preparation and analysis process, at least one transfer means for performing movements of an actuator of the apparatus within the apparatus, at least one fluid actuation means for processing the sample and reagents in said disposable devices, at least one temperature control means for heating or cooling of the disposable or the sample, detection means for measuring a property of the processed samples, and process control means for controlling the sample preparation, the handling of the disposable sample holding and processing devices and the sample analysis performed by the apparatus.

A processing device for nucleic acid amplification and an apparatus is disclosed in US 6,551,841 B1. The known device consists of a substrate of silicon or a polymeric material in which channels and chambers are formed. The substrate is covered by a cover made of glass or plastic which seals the channels and chambers between the substrate and the cover. The reagents are pumped into the device by an interface which does not fully inhibit contamination and carry over and seems to be critical with respect to its reliability. The sample can not be brought into the device in an automatic manner, the device is not automatically loaded and reloaded in the analysis apparatus, great volumes can not be mixed and the fluid path has to be switched. The waste fluids are not passed through the amplification and detection chamber of the device.

Another integrated disposable device for a nucleic acid amplification analysis comprising sample preparation, amplification and detection is disclosed in US 5,955,029. Neither Realtime-PCR nor an analysis apparatus to be used with the device is described.

US 6,043,080 discloses another integrated disposable device for performing an integrated nucleic acid amplification analysis.

The technical field of the invention is related to the automated processing of disposable devices used for analyzing a sample with a nucleic acid amplification technique in a corresponding apparatus in which the disposable is operated. The purpose of the analysis is the detection (presence or absence of an analyte) and/or the quantification of the concentration of an analyte in a sample. In the current invention the analyte is a nucleic acid: RNA or DNA or derivatives there off. The derivatives (Nucleic Acids) mentioned include molecules which are accessible directly or indirectly (e.g. after chemical modification) to a NA amplification method (e.g. DNA-polymerase, Transcriptase, Reverse-Transcriptase, etc.). The target analytes can be e.g. genetic material with biological origin e.g. for genetic testing, in case of infectious diseases the analyte can be nucleic acid material from a virus or bacteria, in case of gene-expression the analytes can be m-RNAs, the analyte can also be methylated DNA.

In order to perform nucleic acid testing including sample preparation, amplification of the nucleic acid material and analysis of a plurality of samples in an economic and therefore time saving, material and cost saving manner, one may wish to be enabled to conduct lysis of the nucleic acids of interest comprised in the sample, amplification and subsequent analysis of the amplified nucleic material in one proceeding and, preferably, in one apparatus in order to avoid waste of material or time, and, which is most important, in order keep the intermediates obtained during the procedure free of contaminations which may influence the result of the procedure.

In order to analyze large numbers of fluid samples by a nucleic acid amplification technique like PCR speed and cost of an analysis are important aspects of an apparatus for processing samples. It is therefore an object of the present invention to provide.an apparatus for suitable disposable sample holding and processing devices suitable for analyzing a fluid sample at low cost and within a conveniently short time. Further disadvantages of the prior art to be overcome by the present invention are the aspects of easy manufacturing of the disposables, easy to use in an automatic processing device, in particular with respect to the aspects of fluid processing including insertion into the disposable and transport and holding of the disposable in the analysis apparatus, the space required by the disposable in the analysis apparatus, the avoiding of biohazard risks and cross-contamination and the integration of functions in the disposable and the apparatus. It is therefore an object of the embodiments of the present invention to provide an improved apparatus for performing nucleic acid sample analysis, optionally including sample preparation. This object is solved by an apparatus according to the independent claims; preferred embodiments are subject matter of the dependent claims.

According to the invention an automatic apparatus for performing nucleic acid sample analysis by using disposable sample holding and processing devices with the apparatus is proposed, said apparatus comprising:
- a detection station for receiving and holding at least one disposable device,
- at least one reagents station for comprising at least one reagent to be used in the nucleic acid sample preparation and/or analysis process,
- at least one transfer means for performing movements of an actuator of the apparatus within the apparatus,
- at least one fluid actuation means for processing the sample (32) and reagents in said disposable devices,
- at least one temperature control means for heating or cooling of the disposable or the sample,
- detection means for measuring a property of the processed samples, and
- process control means for controlling the sample preparation, the handling of the disposable devices and the sample analysis performed by the apparatus,
wherein
- the disposable device is a fluidic device comprising a fluidic system designed for nucleic acid testing, comprising the steps of capturing, amplification and detection within said disposable device,
- the fluid actuation means comprise at least one of a means for transport and manipulation of fluid in the disposable,
and wherein
- the disposable device comprises a binding chamber containing a solid phase for solid phase extraction of a component of the sample to be analyzed, an amplification chamber and a fluid channel connecting the amplification chamber to the binding chamber,
- and the disposable device comprises at least one fluid interface for interacting with the fluid actuation means, said fluid interface providing fluid to the disposable in a vertical direction of flow when the disposable device is operated in the apparatus, in particular a sample preparation station or a detection station.

Embodiments of the present invention address the aforementioned needs in the art and provide an apparatus for performing nucleic acid sample analysis, optionally comprising sample preparation, including PCR.

In a first embodiment of the present invention, the apparatus for performing nucleic acid sample analysis comprises disposable sample holding and processing devices which are operated in a detection station. The apparatus may advantageously comprise the means and mechanisms to handle the disposable sample holding and processing devices ("disposable devices"), comprising the transfer of these disposable devices into the detection station and comprising the transfer of samples within the apparatus; otherwise the disposables may also be manually placed in the detection station or sample preparation station. Furthermore, the apparatus advantageously comprises the means and mechanisms to operate and to control the complete process. Additionally, it comprises detection means to conduct measurements on the processed samples at the stadiums of interest, and to control the process determining and operating parameters.

The detection means can measure at least one of the following optical properties of the fluid: fluorescence, absorption, polarization, fluorescence polarization, fluorescence life-time, scattering or turbidity, luminescence. The property observed depends on the assay and detection scheme. E.g. TaqMan-PCR preferably uses fluorescence measurement.

The disposable device used in the apparatus is a fluidic device comprising a fluidic system designed for nucleic acid testing, comprising the steps of capturing, amplification and detection within said disposable device, and the fluid actuation means of the apparatus comprise at least one of a means for transport and manipulation of fluid in the disposable.

Herein, the disposable sample holding and processing devices are fluidic devices, with the disposable sample processing device comprising a fluidic system which advantageously is designed for performing capturing or binding, respectively, amplification and detection succeeding to lysis within one single device. Advantageously, lysis might also be performed within the disposable devices, but this is optional.

The apparatus has an actuator and transfer means for performing movements of the actuator within the apparatus. These transfer means may also be designed to grip and therefore enable the transporting of the disposable device of interest and positioning it into a receptacle of the processing station, and to re-transport it. The transfer means cooperate with a fluid actuation means which advantageously provides the desired conditions for carrying out necessary operation steps such as uptake of a sample and release of the sample into the disposable device.

The disposable device comprises a binding chamber containing a solid phase for solid phase extraction of a component of the sample to be amplified, an amplification chamber which is in fluid communication with the binding chamber via a fluid channel, and optionally a lysis chamber, enabling lysis prior to amplification of said sample. The detection means are directly communicating with the process finalising elements of the processing device, thereby advantageously enabling in-situ detection, avoiding any external influencing of the analysis. The disposable device comprises at least one fluid interface for interacting with the fluid actuation means, said fluid interface providing fluid to the disposable in a vertical direction of flow when the disposable device is operated in the apparatus, in particular in a sample preparation station or in the detection station.

The aforesaid chambers and channels interconnecting said chambers are preferably arranged in one single plane, which plane becomes vertically arranged when the disposable device is operated in a sample preparation station or the detection station of the apparatus.

With respect to advantageous features and embodiments of a disposable device suitable to be used in combination with a nucleic acid analysis apparatus described in the present application reference is made to the simultaneously filed European patent application of the same applicants by the same representatives, with the title "Disposable device for analyzing a liquid sample containing a nucleic acid with a nucleic acid amplification apparatus", attorneys reference RDG 154/00/EP, the disclosure of which application is incorporated herewith by reference.

Further details and advantages of the present invention are illustrated in the following based on an exemplary embodiment making reference to the attached drawings. The following is depicted in the figures:
- Fig. 1: shows a general workflow overview of a nucleic acid amplification analysis;
- Fig. 2: shows a schematic front view of a first embodiment of a disposable to be used with an apparatus according to the invention;
- Fig. 3: shows a schematic side view to figure 2;
- Fig. 4: shows a schematic front view of a second embodiment of a disposable to be used with an apparatus according to the invention;
- Fig. 5: shows a schematic front view of a third embodiment of a disposable with an integrated waste chamber and without a lysis chamber to be used with an apparatus according to the invention;
- Fig. 6: shows a schematic front view of a fourth embodiment of a disposable without an integrated waste chamber and with a lysis chamber to be used with an apparatus according to the invention;
- Fig. 7: shows an exploded perspective back view of the parts of the disposable according to figure 6 to the back-side of the disposable;
- Fig. 8: shows a schematic front view of a fifth embodiment of a disposable, with an integrated waste chamber and with a lysis chamber to be used with an apparatus according to the invention;
- Fig. 9: shows a general scheme of the functioning of a first embodiment of the automatic apparatus comprising the main operating elements such as an actuation head and a detection station;
- Fig. 10: shows a schematic front view of a second embodiment of the automatic apparatus comprising the main operating elements such as a transfer means and a detection station, outlining the step of inserting the disposable device into the detection station;
- Fig. 11: shows a perspective view of a disposable device according to figures 6 and 7 while being vertically positioned in the detection station with the temperature controlling means and the analyzing means;
- Fig. 12: shows a detail of figure 11;
- Fig. 13: shows a further detail of figure 12 and
- Fig. 14: shows a perspective overall view of an apparatus according to the invention.

Before the invention is described in detail, it is to be understood, that the terminology used herein is for purposes describing particular embodiments only and it is not intended to be limiting. It must be noted that, as used in the specification and the appended claims, the singular forms of "a", "an", and "the" include plural referents until the context clearly dictates otherwise. Thus, for example, the reference to "a disposable device" includes two or more such "disposable devices".

In this specification and in the claims which follow, reference will be made to the following terms which shall be defined to have the herewith explained meanings:

The term "fluidic communication" herein means that two elements which fluidically communicate such as chambers, e.g., may uni- or bidirectionally exchange fluids. Advantageously, the fluidic communication providing feature is a channel.

The expression "single main plane" intends to describe the arrangement of a plurality of components such as chambers and channels with a three-dimensional extension. If mentioned "arranged in single main plane" this means, that one wall of said chambers or channels are in the same plane.

The term "sample providing devices" means a receptacle such as a sample tube, e.g., which contains or stores, respectively, the sample until it is being processed.

The term "disposable device" is the short form of "a disposable sample holding and processing device" which refers to a combined reactor and analyzing means, enabling the performance of reactions - such as capturing, amplification and optionally lysis and optionally collecting waste - while analysis of the molecules of interest is performed succeeding to the amplification in one single device. Such a disposable device can be an integrated disposable device, wherein the term "integrated" refers to the plurality of functionalities comprised in one single processing device, which otherwise may require the use of several disposables.

"Reagents" herein means reagent fluids, taking into consideration that fluids may be gases or liquids; therefore a reagent can be a rinsing or washing liquid, a PCR buffer, protease solution, only to name some substances exemplarily. Thus, the term "reagent" is not intended to be limiting.

"Sample" may herein describe the original fluid to be analyzed or a preprocessed fluid, e.g. after a preanalytic- or lysis step has been performed. Accordingly "sample" may refer to an original probe to be analyzed or to a preprocessed liquid, and the sample may be comprised in a sample container or in a disposable described herein to be analyzed with the apparatus according to the invention.

The embodiments of the present invention generally relate to the field of devices for conducting nucleic acid testing, in particular to nucleic acid amplification using the polymerase chain reaction, or "PCR", with subsequent or nearby real-time analysis of the obtained products.

Accordingly, the novel apparatus is designed under consideration of the particular requirements related to said technology: In order to amplify the nucleic acid comprised in a start volume of a sample, said sample is subjected to lysis, which is a digestion or degradation of undesired matter, such as the digestion of a protein shell of a virus, e.g. by a protease, and/or disrupting cell-walls of a bacterium by detergents. Furthermore, lysis adapts the conditions such as of an ambient solution of the analyte, thus, preparing a binding solution which is ready to be subjected to the next step. Said next step is the binding or "capturing", comprising the contacting of the prior prepared binding solution with a solid phase which sufficiently selectively and sufficiently quantitatively binds nucleic acid. Undesired compounds being bound, too, are eliminated later on by washing.

The nucleic acids are adsorbed to the solid phase and washed, and eluted prior to amplification and prior to the final detection. The detection might be carried out quantitatively or qualitatively with respect to the compound one is aiming for.

Polymerase chain reaction uses the below steps to create copies of polynucleotide sequences located between two initiating sequences, the primers. One starts with a template and the particular PCR reagents, then the components are mixed and heated, thereby separating the double stranded nucleic acid. During the subsequent cooling step, the primers are annealing to complementary sequences on single stranded nucleic acid molecules containing the sequence for amplification. Replication of the target sequence is then accomplished by the nucleic acid polymerase which produces a nucleic acid strand that is complementary to the template. Regarding the aforesaid, the process requires a precise temperature controlling, which accordingly has been focussed in the embodiments of the present invention.

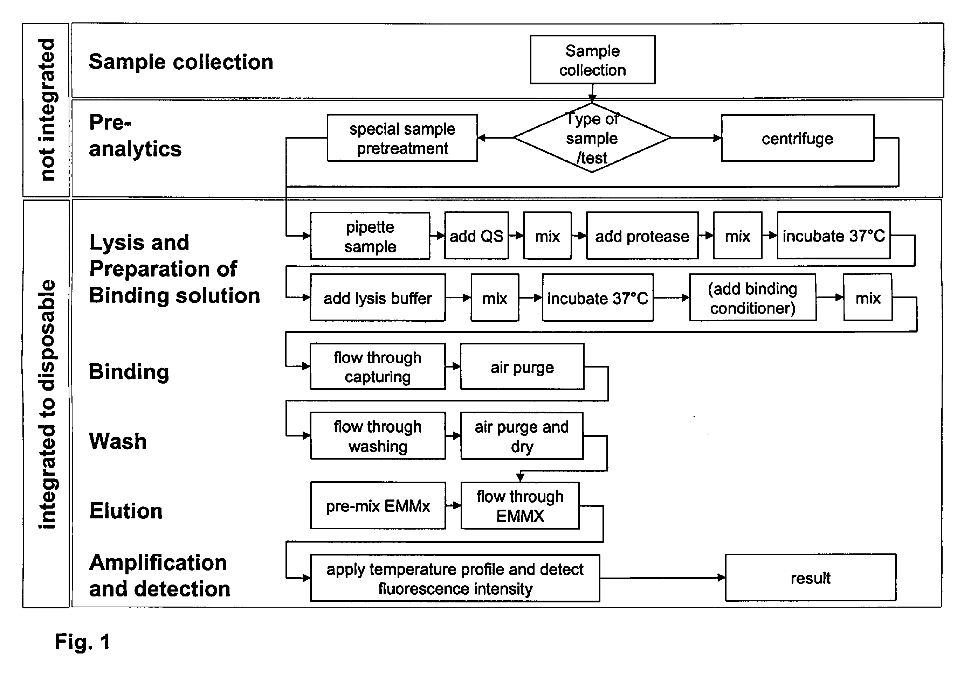

The procedure presented in figure 1 is a typical procedure for nucleic acid testing (NAT) of a sample comprising a nucleic acid (NA) which may be performed with a preferred embodiment of a disposable and of an automated apparatus for performing nucleic acid sample preparation and analysis as described herewith. Most NA analyses (e.g. using the PCR), analyzing the NA in a biological sample, require that the NA is isolated from other components prone to interfere with the detection reaction of the NA. This first step of isolating the NA, is generally called "sample preparation". Typical methods for sample preparation are state of the art. A common method is the solid phase extraction of the NA. In this case NAs bind under high concentrations of a chaotropic salt to glass surfaces, while disturbing material from the sample remains in solution.

After binding of the NA to the solid-phase, the solid phase is washed to remove remaining material from the solid-phase, while the NA stays adsorbed. After this wash step of the solid-phase, depending on the inhibiting properties of the wash buffer, the wash buffer has to be removed or otherwise neutralized or reduced to non inhibiting amounts. After this step, the NA is eluted (i.e. dissolved from the solid phase) into a low concentration salt buffer or pure water. This eluate (containing the purified NAs) is generally conform with many NA detection chemistries/assays, e.g. PCR or other linear or exponential NA amplification- and detection methods.

In a sample collection step a sample is taken where the searched NA is expected to be present. Such sample material can be tissue, blood, urine, sputum. The sample depends on the kind of analyte searched. The method of sampling for NA-testing is state of the art, and depends on the analyte and the place of where the sample is present. For example in the case of testing for viruses as HBV, HCV or HIV in blood approximately 3 ml blood is drawn from a human to be tested into a blood collection tube (e.g. Becton Dickinson, with EDTA anticoagulant).

A preanalytics step is performed depending on the sample, analyte and side conditions. Prior to loading the sample to an automated apparatus being able to carry out the automated NA analysis, the sample may has to go to a "pre analytic" step. This preanalytic step mainly covers all steps which make the sample ready to the automated steps on a NA analyzer apparatus. Such preanalytic steps can include for example
- Homogenization, e.g. of tissue, making the tissue accessible to the following NA procedures,
- Separation, e.g. separation of erythrocytes from blood,
- Suspending, e.g. suspending bacteria and viruses in a liquid medium,
- Grinding, e.g. of plant seeds, for example for genetic testing.

The procedures of such pretreatments are state of the art. An example is that for virus-testing a separation of the red blood chambers from the drawn blood sample according to the recommendations of the sample collection tube (e.g. Becton Dickinson) is performed.

The further analysis steps of figure 1 are preferable performed with an automatic nucleic acid amplification and analysis apparatus according to the present invention, preferably with a disposable as described in this application. For this purpose the automated analysis apparatus is manually or automatically loaded with all required material which is used for the analysis. Such materials to be loaded on the apparatus may be samples to be analyzed, integrated disposables for carrying out the analysis, which are used for one single assay or part of the assay and which are discharged to the waste after use, and reagents used to run the apparatus e.g. system fluid, system wash buffer, and reagents used for the assay, e.g. sample preparation reagents and detection reagents.

The sample can get loaded in a sample collection tube or in special tubes/containers. Disposables are preferably loaded in racks or holders on the apparatus. One single assay may use one single or several different or equal disposables. Such a disposable can be an integrated disposable, wherein integrated means that a number of functions used for one assay are provided in one disposable unit, optionally having several subunits, or a set of several equal or unequal disposables are provided, e.g. if required comprising disposable tips.

Reagents to run the apparatus, e.g. system wash buffers, system fluid, etc, are preferably provided in larger amounts, able to run the apparatus at least one day. Such reagents can be diluters, digesting agents (e.g. proteinase or lysing buffers), conditioners (e.g. for adjusting binding conditions), wash-buffers for cleaning a solid-phase, standards (as internal control or for quantification), detection reagents, etc. Reagents used for the disposable itself can get loaded in form of a reagent kit containing all reagents to run one single disposable or in kits allowing many disposables.

Material can be identified by barcode or other identification means for automation reasons. An example of a material to be loaded on an automated NA-apparatus for analyzing HBV-Virus in a human plasma comprises the following:
- Sample: At least 1 ml sample (EDTA-Plasma) provided in a tube, identified by a bar-code. For control reason or performance studies the sample can get spiked with HBV viruses provided e.g. from the company Acrometrix (e.g. 1 ml sample spiked with 10'000 copies of HBV virus).
- Reagents:
o System-/wash fluid

| | | |
|---|---|---|
| 0.4 | ml | Octan-1-ol |
| 0.3 | g | Trion X100 |
| 0.01 | g | Sodium Azide |
| 0.1 | mMol | Phosphat-buffer pH 7.4 |
| 1 | mmol | Sodium Chloride |
| 1.000 | L | System-/wash fluid (completed with water) |

o Lysisbuffer

| | | |
|---|---|---|
| 5.5 | Mol | Guanidinium-rhodanid |
| 0.04 | Mol | TRIS pH 7.4 |
| 9 | g | Triton X100 |
| 0.02 | Mol | 1,4-Dimercapot-2,3-butandiol (DTT), threo |
| 14 | mg | polyA (Amersham Sciences) |
| 1.000 | L | Lysisbuffer (completed with water) |

o Wash buffer

| | | |
|---|---|---|
| 200 | g | Water |
| 10 | mg | polyA (Amersham Sciences) |
| 0.16 | g | Triton X100 |
| 0.66 | mMol | TRIS pH 7.5 |
| 570 | g | Ethanol |
| 30 | g | Isopropanol |
| approx 1.0 | L | Wash buffer |

o Proteinase: Reagent used from the Roche Diagnostics Taqman® HBV Kit

| | |
|---|---|
| Kit-No | : 03370194 190 |
| Cassette-No | : 00058005073 |
| Reagent-No | : 03 359 026-102. |
| Identifier | : Pase |

o QS (Quantification Standard): Reagent used from the Roche Diagnostics Taqman® HBV Kit

| | |
|---|---|
| Kit-No : | : 03370194 190 |
| Cassette-No | : 00058005076 |
| Reagent-No | : 0058004657 |
| Identifier | : QS |

o Elution buffer

| | | |
|---|---|---|
| 50 | mg | Dodecyl-beta-maltoside (Fluka, PN 44205) |
| 3.3 | mMol | TRIS pH 7.5 |
| 5 | mg | polyA (Amersham Sciences) |
| 1.000 | L | Elution buffer (completed with water) |

o Mastermix A (Mn): Reagent used from the Roche Diagnostics Taqman® HBV Kit

| | |
|---|---|
| Kit-No : 03370194 190 | |
| Cassette-No | : 00058005076 |
| Reagent-No | : 0058004402 |
| Identifier | : Mn |

o Mastermix B: Reagent used from the Roche Diagnostics Taqman® HBV Kit

| | |
|---|---|
| Kit-No : 03370194 190 | |
| Cassette-No | : 00058005076 |
| Reagent-No | : 0058004403 |
| Identifier | : Mastermix |

o Combined Elution Mastermix ("EMMx") - Mixed prior to use

| | | |
|---|---|---|
| 0.5 | ml | Elution buffer |
| 0.15 | ml | Mastermix A (Mn) |
| 0.35 | ml | Mastermix B |
| 1 | ml | EMMx |

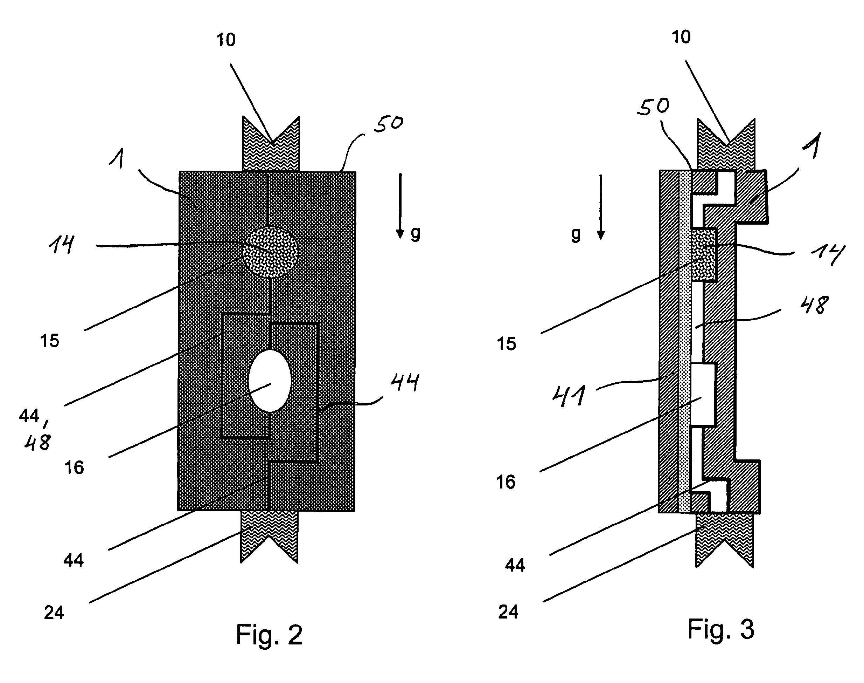

Figures 2 to 8 illustrate typical advantageous schemes and embodiments of integrated disposable devices 1 to be used with an apparatus 55 according to the invention. A device 1 is a functional integrated and miniaturized chip with an inserted glass fiber fleece 14 and interfaces for fluids and is suitable for integrating the steps of capturing, amplification and detection. It comprises a fluid supply port, a fluid removal interface or a waste chamber, a binding chamber 15, an amplification and detection chamber 16 and channels 44 comprising the channel 48 connecting the amplification and detection chamber 16 to the binding chamber 15. The disposable sample holding and processing device 1 is dimensioned for insertion into and being operated (processed) in a nucleic acid amplification apparatus 55 for analyzing a liquid sample containing a nucleic acid by a nucleic acid amplification technique. Also a heat transfer wall 41 and a light transparent wall located above the amplification chamber 16 can be provided.

The basis construction of a disposable device 1 comprises a rigid body 42, the capturing- or binding chamber 15 containing a solid phase for solid phase extraction of a component of the sample, the amplification chamber 16 and the channels 44; in addition a lysis chamber 3 may be comprised. The reaction chambers 3, 15, 16 being interconnected in the given order by channels 44, thus providing a fluidic system.

The binding chamber 15, the fluid channel 48 and the amplification chamber 16 of said disposable device 1 are preferably arranged in one single main plane or in a side-surface 50 of the body 42, which plane is arranged vertically, i.e. into the direction of gravity g, when the disposable device 1 is inserted into a detection station 40 of the apparatus 55 in order to save footprint of the device 1. It must be taken into consideration, that the lysis chamber 3 is an optional feature - generally, lysis may be performed in an external apparatus, so that a readily prepared sample might be injected into the disposable device 1 for further proceeding.

According to preferred embodiments of the invention the device 1 comprises at least one fluid interface to be connected to the fluid actuation means of the apparatus 55, the fluid interface being connected by a fluid channel 44 to at least one chamber of the device 1, preferably to one of the binding chamber 15 and the amplification chamber 16, wherein the fluid interfaces are situated on top- and/or bottom-surfaces of the body 42 when the device 1 is operated in the nucleic acid amplification apparatus 55. The fluid interfaces may be interfaces for supply and/or removal of fluid used in the device 1 upon processing the sample preparation or analysis, said fluid interface function, i.e. fluid supply or removal being provided by corresponding elements of the apparatus 55. The fluid may be a gas or a liquid, e.g. a sample 32 or reagent 25.

According to a further preferred embodiment the fluid interfaces are to be contacted by fluid delivery and/or fluid removal means of the nucleic acid amplification apparatus 55, wherein the fluid delivery and/or fluid removal means are adapted to supply to and/or to remove from the device 1 a fluid in a vertical direction of flow. According to this it may be, e.g., be advantageous for operational reasons of the apparatus 55 when the device 1 and the apparatus 55 are constructed such that a supply of a fluid to the device 1 takes places at the top of the device 1 in a downward direction of flow and the removal of a fluid from the device 1 takes places at the bottom of the device 1, e.g. in downward direction of flow.

The individual elements of the embodiments of a device 1 shown in figures 2 to 8 are described as follows.

The integrated disposable 1 is a device for performing a Nucleic Acid Test (NAT). The integrated disposable 1 contains a number of integrated elements required to perform a number of procedures required for NAT. Such functions are e.g. chambers for lysis of material, means for diluting and mixing, means performing incubation steps (e.g. a heat transfer wall 41), means for solid phase 14 adsorption, means for fluid transport and/or means for amplification and/or detection steps. The integrated disposable 1 is typically made out of a rigid body 42 forming a substrate of the device 1, which defines chambers, mechanical, fluid and optical interfaces and a second heat transferring wall 41 joined to this body 42. The body 42 has typically an outer volume between 0.5 ml and 50 ml. Most preferred in a range of 2 ml to 20 ml.

The device 1 is a fluidic device comprising chambers and channels designed to perform the steps of capturing, amplification and detection of the nucleic acid amplification analysis within the device, comprising a binding chamber 15 containing a solid phase 14 for immobilization / solid phase extraction of a component of the sample to be analyzed, and an amplification chamber 16 connected to the binding chamber 15 by a fluid channel 48. The binding chamber 15 and the amplification chamber 16 of the disposable device 1 are preferably situated on side-surfaces 50 of the body 42, each of those side-surfaces 50, on which the binding chamber 15 or the amplification chamber 16 is situated, is covered by at least one wall 41 and these side-surfaces 50 are substantially vertical planes, see the direction of gravity g in the figures, when the device 1 is operated in the nucleic acid amplification apparatus 55, in particular in a sample preparation station 17 or in the detection station 40. Of course, the channels 44 may be preferably situated in the same manner as the binding chamber 15 and the amplification chamber 16, and further it is preferred when most or all of these elements are situated on one single side-surface 50.

A side-surface 50 of body 42 may be considered to be a "main plane" of the device 1, that plane being a vertical plane when the device 1 is inserted into the nucleic acid amplification apparatus 55 for operation and processing. According to the invention it is not required that the complete channel 44 is located in the side-surface 50 or main plane, in some embodiments it may be sufficient that e.g. at least the channel 44 connecting the amplification chamber 16 to the binding chamber 15 is arranged in that plane.

The disposable 1 has a layout which is applicable to mass production at low cost. It allows a simple automation of the processing in a nucleic acid amplification apparatus 55 leading to cost reductions and smaller apparatus dimensions. It is flexible in respect to an accommodation to various process versions in respect to workflow, sample-volume and target-analyte, has a high analytical performance provides a fast high reliability of the processing and test results. It is very suitable for an easy automation, increasing the reliability of the apparatus, and provides an easy handling by the customer. Because it is self-contained it is cross-contamination save and save to operate for the ambient.

At least one wall is joined to the body 42 by appropriate joining techniques. Typical techniques are ultrasound joining, thermal sealing, laser welding, and gluing. Other elements of the integrated disposable 1 may inserted or plugged in to appropriate openings in the body 42. Parts of the disposable may be also made in a 2-compound injection molding process

The channels 44 for fluid transport and chambers for accommodating fluid are formed between the body 42 and the heat transferring wall 41.

The lysis chamber 3 is an optional chamber within the integrated disposable 1 and has preferably at least one heat transferable wall. The volume of the lysis chamber 3 is typically within a range of 50 µl and 20 ml, most preferred in a range of 100 µl and 10 ml.

The lysis chamber 3 is a sample preparation chamber suitable for performing the step of lysis of the nucleic acid analysis within the device 1. The sample preparation chamber comprises an opening adapted to receive a sample transfer tip 12 for transferring liquid into the device 1-Preferably the lysis chamber 3 is situated in a side-surface 50 of the device 1, i.e. the lysis chamber 3 is situated on a side-surface 50 of the body 42 and that side-surface 50 being covered by a wall 41, which wall 41 is substantially a vertical plane when the device 1 is operated in the nucleic acid amplification apparatus 55. According to another preferred embodiment the outlet of the sample preparation chamber 3 may be located in the main plane of the device 1, i.e. a side-surface 50, or in a plane parallel to that plane in order to achieve a small footprint of the device 1.

According to a preferred embodiment which is advantageous in practice the volume of the sample preparation chamber (lysis chamber 3) is much larger than the volume of the amplification chamber 16, the sample is kept and located in the lower end of the sample preparation chamber by gravity and may be transported through the binding chamber 15, the fluid channel 44 and the amplification chamber 16 upon use of the device 1 in a nucleic acid amplification apparatus by a pressure difference between an inlet of the device 1, particularly the sample preparation chamber, and an outlet of the device, the pressure difference being applied to the device by the nucleic acid amplification apparatus.

The pressure difference may be a pneumatic or hydraulic pressure difference. The pressure difference may be applied to the device 1 by applying atmospheric pressure or overpressure to the inlet side of a chamber or fluid channel of the device 1. The pressure difference may be also applied to the device 1 by applying negative pressure or vacuum to the outlet side of a chamber or fluid channel of the device 1.

The lysis chamber 3 venting system 4 is a fluidic connection between the lysis chamber 3 and the ambient allowing gas exchange. The lysis chamber 3 venting system consists typically of a channel 44 with a cross section between 0.01 mm² and 10 mm², most preferred between 0.04 mm² and 2 mm².

For contamination save operation there can be a lysis chamber venting filter 5 within the fluidic path of the lysis chamber venting system 4. Such filters are commonly known, e.g. from contamination save disposable pipetting tips. Such filters consist typically from a porous material, e.g. cellulose or from a porous polymer. A typical filter area is in a range of 1 mm² to 500 mm², most preferred 10 mm² to 100 mm².

The venting sealing point 6 is located in a section of a channel 44, where the channel has to be closed at a certain point of the process. The venting sealing point 6 is typically a section of a channel formed between the two layers body 42 and heat transfer wall. The venting sealing point 6 is located in the lysis chamber venting system 4.

The closing sealing point 7 is located in a section of a channel 44, where the channel has to be closed at a certain point of the process. The sealing point is typically a section of a channel formed between the two layers: body 42 and heat transfer wall. The closing sealing point 7 is located in the fluidic connection between the lysis chamber 3 and the binding chamber 15.

In general terms it may be preferred when the body 42 of the device 1 comprises at least one sealing point 6, 7 located close to a channel 44 of the device 1, said channel 44 leading from a chamber of the device 1 to an inlet port 8, 10, outlet port / waste connector 24 or venting port 49 of the device 1, or leading from a first chamber (e.g. the lysis chamber 3) to a second chamber (e.g. the amplification and detection chamber 16), wherein the channel 44 located close to the sealing point 6, 7 can be reversibly or irreversibly sealed by a sealer of the nucleic acid amplification apparatus, e.g. a thermal actuator, which may for example be a linear actuated heated piston, in order to close said channel 44 for interrupting a flow of liquid or gas through said channel 44 by deforming the channel in its width and thereby sealing together opposite walls of the channel.

To inhibit the flow through an open channel 44, the channel may be closed by thermally sealing off the channel, by means of a channel sealing equipment of the analysis apparatus, i.e. the sealer. For closing channels, channels may be sealed thermally. Under elevated temperature a section in the channel (the sealing point 6 or 7) is compressed or deformed and the open fluid path is closed and sealed together. The channel sealing equipment may consist of a heated piston (regulated to a temperature between 200 °C and 400 °C, most preferred from 250 °C to 350 °C), and an actuator able to press the piston towards the sealing point 6, 7 on the integrated disposable 1. The distance of actuation is typically in the range of 0.1 mm to 20 mm, more preferred in a range of 0.2 mm to 3 mm. The force exerted on the disposable 1 may be in the range of 1 N to 100 N, most preferred in range of 2 N to 20 N. The piston may have an active sealing area between 0.5 mm² and 10 mm², most preferred from 1 mm² to 3 mm² and is adapted to the diameter and shape of the sealing point.

The first fluid port 8 and the second fluid port 10 are interfaces on the integrated disposable 1 by which reagents 25 and optional process gases are delivered to the inside of the integrated disposable 1. The fluid ports 8, 10 are preferably a septum, made of an elastomere. The septum can be pierced by a fluid delivery device, e.g. a reagents pipetting tip 28. The elastomere has a Shore A hardness between 10 und 100 Shore, most preferred between 30 and 60. The thickness in the dimension where the septum is pierced can be in a range of 0.4 mm to 12 mm, most preferred in a range of 2 to 8 mm. The diameter of the septum is in the range of 2 mm to 12 mm, most preferred in the range of 3 mm to 8 mm.

The fluidic connection 9 is channel 44 leading to the lysis chamber 3 starting at first fluid port 8. The fluidic connection 11 is channel 44 leading to the binding chamber 15 starting at second fluid port 10. In order to avoid backflow, outflow of liquid from the binding chamber 15 through the fluidic connection 11 or compression of fluid up to the fluid connection 11 the length of the corresponding channel 44 may be enlarged by not taking a short or direct way, e.g. by giving the channel a meander line.

The (disposable or single-use) sample pipetting tip 12 is common state of the art. It can hold a liquid volume between 10 µl and 10 ml, more preferred between 20 µl and 5 ml and most preferred between 50 µl and 3 ml. The diameter of the opening, at the side where the tip 12 dips into a sample and where the sample is aspirated has an open diameter of 200 µm to 2,000 µm, most preferred a diameter in a range of 400 µm to 1,000 µm. The open diameter where the tip is connected to a tip gripper 35 has a diameter in a range of 2 mm to 20 mm. The tip 12 may have on its outer, upper region a section where the tip 12 forms a sealing zone 43 with the body 42. At the upper end the tip 12 has an interface that is tightly connectable to a tip gripper 35. Due to the contact with sample 32 and reagents 25 the material of the tip 12 has to be inert to the NAT-assay. A most preferred material is a thermoplastic polymer. Most preferred polymers are polyethylene and polypropylene.

A tip filter 13 may be integrated to the tip 12 to avoid e.g. carry-over by aerosols. The filter 13 will inhibit such undesired mass transport by filtration or retention. The tip filter 13 is typically plugged into the tip 12 and has typically a cylinder like shape. The diameter of the filter is selected to give a tight fitting between the inner wall of the sample pipetting tip 12 and the filter 13. Typical materials for this filter 13 are sintered porous thermoplastic polymers, or fiber based filters (fibers e.g. from cellulose, glass, or polymeric fibers). When required also combinations of materials may be used.

The solid phase 14 is a piece of material with selected material properties. A key material property is its ability to be used for the purification process of the nucleic acids from the matrix. The material must be able to adsorb/desorb respectively bind/release nucleic acids under set conditions. By changing the ambient conditions the nucleic acids are either selectively adsorbed or bound, respectively by changing the conditions the NA are desorbed or released.

A common used system uses as solid-phase silica, and for the adsorption of the nucleic acids, the nucleic acids are brought in contact to the solid phase 14, while the nucleic acids are dissolved in a solution of high salt concentration (e.g. in a 4 Molar Guanidinium chloride solution). For desorption of the nucleic acids bound on the solid phase 14 they have to be brought in contact with an elution buffer of low salt content. The selection of the solid-phase, the binding and elution conditions are broadly described in the literature.

The amount of solid phase 14 used in a disposable 1 is defined by the specific binding capacity of a selected solid phase 14 material and the required binding capacity used in the application. For example a glass fiber fleece made of fibers from CAS 65997-17-3, with a weight of 50 to 800 g/m² and an uncompressed thickness of 100 µm to 10 mm may be used. Most preferred 100 g/m² to 400 g/m² and a thickness of most preferred 200 µm to 5 mm is used. Typically the piece of material has a thickness of 1 mm and a diameter of 1 mm to 20 mm, most preferred of 3 mm to 12 mm is used. But also another material may be used, e.g. a sintered solid phase, in another shape.

The binding chamber 15 harbors on one side the solid phase 14 and on the other side provides fluidic connections for processing the process fluids through the solid phase 14. The binding chamber 15 generally has an inlet and an outlet and the solid phase 14 is located in between. The shape of the inlets and outlets are preferably designed in an optimal manner to allow the fluid to flow in respectively out of the solid phase 14. The binding chamber 15 can have various shapes, e.g. a cylindrical shape with a diameter from 1 mm to 20 mm, more preferred from 2 mm to 12 mm, and a height of 0.1 mm to 10 mm, most preferred in a range from 1 mm to 5 mm. The volume ranges therefore from approx. 5 µl to 500 µl and is most preferred in a range of 10 µl to 200 µl. The shape of the inlets and outlets of the binding chamber 15 may be specifically designed to allow the fluid to flow in resp. out of the solid phase in an optimized manner.

The amplification and detection chamber 16 is designed to optimally perform the amplification/detection step. In case of PCR, where thermal cycling is required at least one wall should allow heat transfer. The heat transfer wall 41 is preferably located in the side-surface 50 of device 1. In general, according to a preferred embodiment of the invention, the amplification chamber 16 is covered on one side with a heat transfer wall 41 having a good thermal conductivity for providing a direct or indirect thermal contact between a temperature control means of the nucleic acid analysis apparatus and the amplification chamber 16 for heating and/or cooling of a sample in the amplification chamber 16 of the device when it is operated in the nucleic acid amplification apparatus.

According to another preferable embodiment the effective direction of heat flow between the temperature control means of the nucleic acid amplification apparatus and the amplification chamber 16 is horizontal and perpendicular in regard to the plane of the heat transfer wall, i.e. the heat flow direction is perpendicular in regard to the heater surface being in contact with the heat transfer and sealing foil of the amplification chamber 16. This allows a good thermal coupling with a big surface over a short distance and also requires only little space in the apparatus.

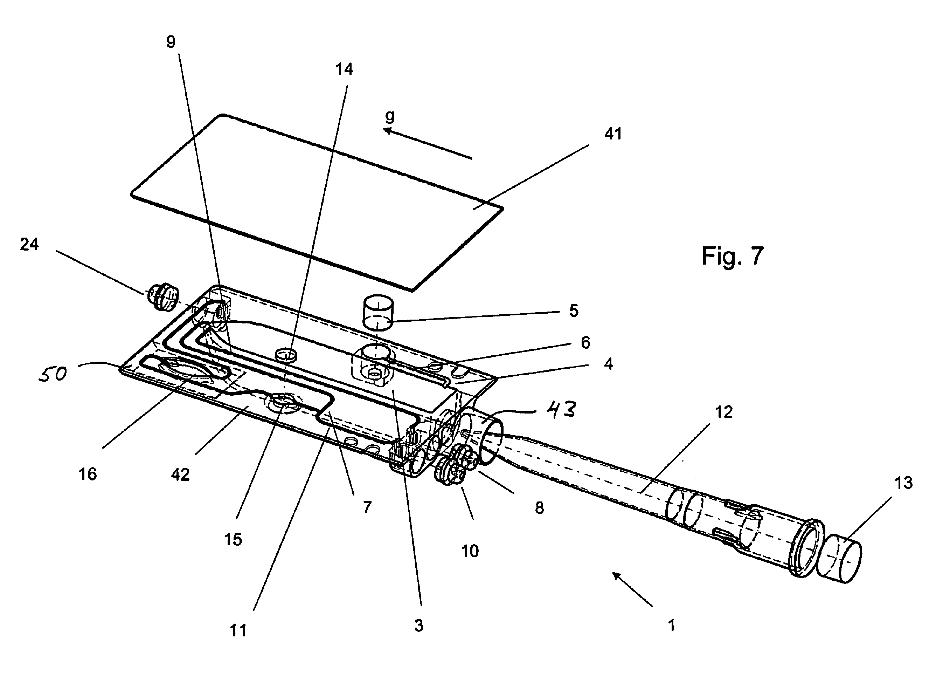

Where optical detection is required at least one wall of the chamber 16 has a sufficient transparency, i.e. comprises a transparent optical measurement window. According to a preferred embodiment a transparent optical measurement window of the amplification chamber 16 and the heat transfer wall 41 are arranged on opposite sides of the amplification chamber 16. In the embodiment illustrated in figure 7 the optical window 53 of the amplification chamber 16 is on the downward side and the heat transfer wall 41 is on the upward side. For fitting/evacuation respectively ventilation the chamber has an inlet and an outlet. The chamber 16 is designed in a manner not to generate carry over from one process step to another. According to another preferred embodiment a transparent optical measurement window is provided in the amplification chamber 16, wherein the measurement direction from the measurement window to an optical sensor of the nucleic acid amplification apparatus is horizontal.

In order to give a robust signal the optical detection area (= area observed by a detector during analysis) has a size of at least 1 mm², more preferred at least 4 mm². A most preferred range may be 5 mm² to 20 mm². Observing a larger area especially in case of a fluorescence measurement makes the fluorescence measurement less sensitive to e.g. bubbles occasionally observed.

A specific feature of the embodiment according to device 1 is that the fluid path (comprising at least some of the channels 44) is constructed in such a manner that all fluids passing through the binding chamber 15 also pass through the amplification chamber 16, as there is no bypass of the amplification chamber 16 that would allow a fluid leaving the binding chamber 15 to reach an outlet of the device 1 without passing through the amplification chamber 16. It has been found in the framework of the invention that this feature does not interfere with the requirement of a precise and reliable analysis if a suitable wash step of the amplification chamber is performed before the elution, amplification and detection is performed.

Typical volumes of this chamber 16 are in a range of 1 µl to 300 µl, most preferred in range of 5 µl to 200 µl. For fast heat transfers within the fluid the chamber 16 is thin and flat, and the wall on the flat side has a high heat conductivity. The thickness of the amplification chamber 16 in the direction of heat transfer is in the range of 50 µm to 5 mm, more preferred in a range of 100 µm to 2 mm and most preferred in a range of 200 µm to 1 mm. According to another general aspect it may be preferable when the volume of the amplification chamber 16 is larger than the volume of the binding chamber 15, but preferably not larger than twice the volume of the binding chamber 15.

According to a further preferable embodiment fluidic filling measurement means is provided in the outlet channel of the amplification chamber 16 close to the outlet of the amplification chamber for detecting a moment when the amplification chamber 16 has been filled or emptied completely. This may be helpful to monitor the nucleic analysis process, e.g. in order to avoid loss of material to be detected in the amplification chamber 16 by leaving the amplification chamber 16 when it is filled by entering of this material or by entering of much of this material into the outlet channel of the amplification chamber 16. This feature is particularly advantageous in the binding step, wherein the binding solution is processed through the binding chamber 15, and in the elution step when the nucleic acids to be detected are transferred from the binding chamber 15 to the amplification chamber 16.

The fluidic filling measurement means may be an optical transparent window within the disposable enabling optical detection of fluid in the outlet channel by a corresponding optical sensor of the nucleic acid amplification apparatus 55, e.g. by measurement of fluorescence, transmission, reflection, refraction or absorption, if required with the additional use of a mirror, or an electric sensor placed in or close to the outlet channel.

According to a preferred embodiment of the invention the inlet channel of the amplification chamber, the amplification chamber 16 and the outlet channel of the amplification chamber are arranged such in the device 1 that the liquid enters into the amplification chamber 16 through the inlet channel in an upward direction and leaves the amplification chamber through the outlet channel in an upward direction when the device 1 is operated in the nucleic acid analysis apparatus. In this case the complete and bubble free filling of the amplification chamber 16 is improved and no liquid is lost into the output channel before the amplification chamber 16 is filled completely.

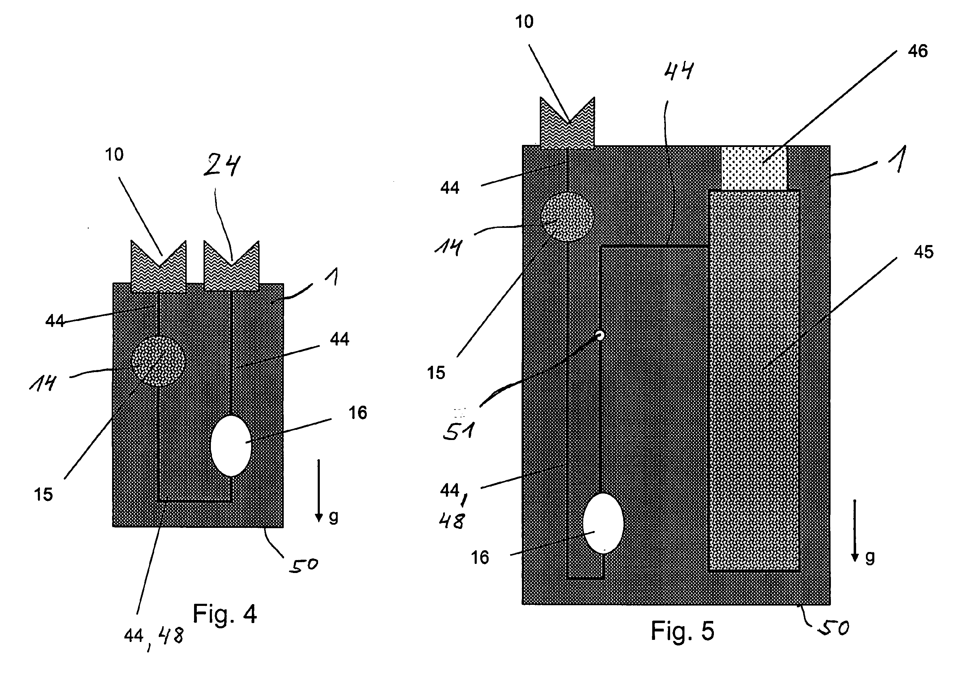

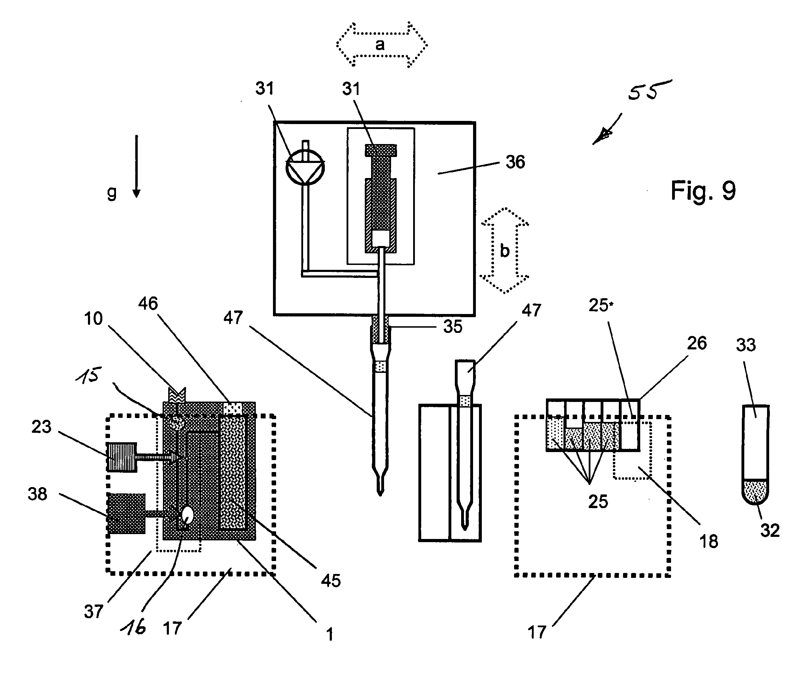

The waste connector 24 provides a fluidic connection of the disposable 1 to a waste container 19 of the nucleic acid analysis apparatus into which the disposable 1 is inserted for operation and use. However, it is not mandatory to have a waste connector 24 on the device 1. In other embodiments which are schematically illustrated in figures 5 and 8 the device 1 may comprise one or several waste chambers 45 integrated into the device 1 for taking up waste material resulting in the process performed with the device 1; in such cases no waste connector 24 to a waste container 19 external of the device 1 may be required. However, a venting mechanism, e.g. venting ports or a waste chamber ventilation 46, may in this case be suitable or required for enabling liquid to reach and enter into the waste chamber 45 then, and allowing gas to exit the waste chamber 45.

Further a sealing point 51 may be comprised for closing the channel 44 leading to the waste chamber 45. The waste chamber 45 has a volume to collect all liquid waste resulting out of the nucleic acid analysis process. Such waste liquids are e.g. processed binding solution and the used wash buffer. The volume is typically in a range of 0.2 ml to 10 ml, most preferred between 0.5 to 5 ml. The integrated waste chamber 46 may contain a hydrophilic, fleece like material, e.g. cotton or glass fibers to capillary adsorbe the waste fluids arriving in the waste chamber 45. For gas exchange (gas communication) between the interior of the integrated waste chamber 45 with the ambient the waste chamber 45 has an opening which allows gas exchange, i.e. ventilation of the waste chamber 45. The ventilation does not allow fluid or aerosol to pass through the ventilation-material (at normal operation). A same or similar material as in the tip 12 or for the lysis-chamber venting filter 5 is used, e.g. a porous plastic plug or a PTFE membrane.

The fluid port 8 serves as reagents inlet to the lysis chamber 3. The fluid port 10 serves as a fluid supply interface connected by a fluid channel 44 to at least one of the binding chamber 15 and the amplification chamber 16, preferably to the inlet side of the binding chamber 15, the supply interface being located in the side-surface 50 or main plane of the device 1 or in a parallel plane to that plane 50 and being adapted to be contacted by a fluid supply means of the nucleic acid amplification apparatus, wherein the fluid supply means is adapted to supply to the device 1 liquid like a sample 32 or a reagent 25 in a vertical direction of flow. The waste connector 24 serves as a fluid removal interface connected by a fluid channel 44 to at least one of the binding chamber 15 and the amplification chamber 16, preferably to the outlet side of the amplification chamber 16, the removal interface being located in the side-surface 50 of the device 1 or in a parallel plane to that plane 50 and being adapted to be contacted by a fluid supply means of the nucleic acid amplification apparatus 55, wherein the fluid supply means is adapted to remove from the device 1 liquid like a sample 32 or a reagent 25 in a vertical direction of flow, i.e. in a direction parallel to the side-surface 50 of the device 1. By this a small space is required for the disposables 1 and they can be stored and processed in a closed distance to one another.

For this purpose the analysis apparatus 55 may comprise a reagent pipetting system 27 for dosing a required reagent 25, generally by aspirating the reagent 25 from a reagent container 26 and dispensing it to the place where the reagent 25 is used. The reagent pipetting system 27 may comprise a reagent dosing fluid system and a reagent pipetting tip 28 by which the reagent 25 is aspirated respectively dispensed, e.g. an elongated hollow needle able to pick up a reagent 25 from a reagent container 26 and applying it to the place where the reagent 25 is used.

Also a gas dosing system for delivering air (or an other gas, e.g. purified nitrogen) to the disposable 1 by an interface may be provided by the analysis apparatus 55. The system may deliver gas with constant pressure, various pressures and/or a predefined gas-volume. The system may need in a case where air is used an air filter. For the application of the gas a connecting element, able to interface to the point of application is required.

Further a sample dosing system 34 may be provided by the analysis apparatus 55, i.e. a system able to aspirate respectively dispense a defined volume of sample or air to the disposable 1. Typically an air displacement syringe pump may be used.

An advantageous feature of embodiments of disposable devices 1 shown in figures 2 to 8 may be that they comprise at least two fluid supply interfaces, namely a first one for supplying a sample to the device 1, which is performed in the example show by the tip 12 into the lysis chamber 3, and a second one, e.g. fluid port 8 or 10, for supplying a reagent 25 to the device 1. This embodiment is advantageous in that it helps to reduce contamination- and carry-over-problems.

According to preferred embodiments the fluid supply connection elements of the disposable 1 are constructed such that a fluid can be supplied to the disposable 1 from above the disposable 1 in a downward direction and/or a fluid can be removed from the disposable 1 in an upward or downward direction. By this a small space is required for the disposables 1 and they can be stored and processed in a closed distance to one another.

For this purposes the device 1, i.e. the part of the device 1 lying in the side-surface 50 or "main plane" has preferably a basically rectangular shape (when viewed orthogonal to the side-surface 50) and the fluid supply interface and/or the fluid removal interface is located on the short side (top or bottom of the side-surface) of the rectangle and oriented such that the fluid supply and/or removal is performed oriented parallel to the plane of that rectangle, i.e. the side-surface 50 of the device 1.

The heat transferring wall 41 forms together with the body 42 (and together with inserted parts as septa, fleece and vents) an assembly of the disposable 1. The heat transferring wall 41 is joined to the body 42 in a manner that the resulting connection is fluidic tight. The open space formed between the body 42 and the heat transferring wall 41 forms channels and chambers. The joining techniques used to assemble the heat transferring wall 41 to the body 42 are commonly known. Typical and preferred joining techniques are laser welding, ultrasound joining, thermal bonding or sealing, and gluing.

The heat transferring wall 41 is generally a flat, sheet like material, or a thin layered body 42. The thickness of this element is typically in a range of 0.01 mm to 1 mm, most preferred in a range of 0.04 mm to 0.35 mm. The overall heat transfer rate of the heat transferring wall 41 is typically greater than 200 W/m2/K, more preferred greater than 2,000 W/m2/K. According to preferred embodiments the heat transfer wall 41 is a sealing foil, particularly a metallic foil or a foil comprising a metal sheet.

Because the heat transferring wall 41 is in contact with the reagents 25 used for the assay and the reaction fluids, a similar inertness to the reaction is required as for the body 42, at least for those sections of this element which are in contact with the reagents 25 or reaction fluids. A preferred material to be in contact with the reaction fluids or reagents 25 is Polypropylene.

A preferred heat transferring wall 41 is a laminate formed by a polymer and a metal-layer. Where in the assembled status the polymer layer is the layer closer to the body 42 forming the material being in contact with the reagents 25 and sample 32 and where the metal layer is farer from the body 42 and is not in direct contact to the reagents 25 and sample 32. A preferred laminate foil has a polymer-layer form 0.1 µm and 300 µm, most preferred between 0.1 µm and 80 µm and a metal layer with a thickness from 20 µm to 400 µm, most preferred within a range of 20 µm to 200 µm. A most preferred material to be joined to a polypropylene body 42 by thermal sealing is a laminate foil of 35 µm polypropylene and 100 µm aluminum, which are commercially available.

In a preferred embodiment the device 1 comprises a device body 42 having a structured surface and a sealing cover 41 which covers the structured surface thereby forming a wall of the amplification chamber 16 for performing nucleic acid amplification, and of an inlet channel connected to the amplification chamber 16 for providing the amplification chamber 16 with sample liquid, wherein a first layer of the sealing cover 41 is made of a material which is inert with respect to the sample liquid, and a second layer of the sealing cover 41 which is made of a metal, preferably aluminium.

The rigid body 42 is stiff and hard such that it has a fixed shape. It is typically made from a firm, stable, hard material, e.g. a single plastic polymer. Preferred materials for NAT are as inert as required to the corresponding nucleic acid test or assay. Supplemental requirements may exist for the material as e.g. transparency, mechanical requirement, thermal requirements, etc. A most preferred material for the body 42 for many NAT assays is polypropylene. The body 42 may be produced in an injection molding process. When required also a two compound injection molding may be used to include thermoplastic elastomeric (TPE) elements in the injection molded part production process. In this manner for example inlets made from a thermoplastic elastomere, adhering to the body 42, may be included. The material thickness of the body 42 is preferably in the range of 0.3 mm to 4 mm, most preferred in a range of 0.5 mm to 1.5 mm. Preferable mechanical properties of the material are as follows: Tensile modulus (modulus of elasticity, Young's modulus) in the range from 0.1 to 5 GPa; tensile strength in the range from 10 to 200 MPa.

Grooves in body 42, which are covered during the production process of the integrated disposable 1 by the heat transferring wall 41, can form either chambers or channels. An increased stiffness of the body 42 without using thick walls can be achieved by using rips. According to a preferred embodiment the device may comprise a device body 42 and a cover which covers a surface of the device body, and wherein a fluid channel is provided as a groove in the surface of the device body covered by the cover which is fixed to the surface of the device body.

The sealing zone 43 is located between the body 42 and the sample pipetting tip 12. The sealing zone 43 is generated between the body 42 and the sample pipetting tip 12, when the tip is plugged into the corresponding opening in the disposable.

The channels 44 are fluid transport ways within the integrated disposable 1, generally formed between the body 42 and a second element covering a groove in the body 42, e.g. covered by the heat transferring wall 41. The cross section of a channel has an area in the range of 0.01 mm² to 2 mm², more preferred from 0.04 mm² to 0.5 mm².

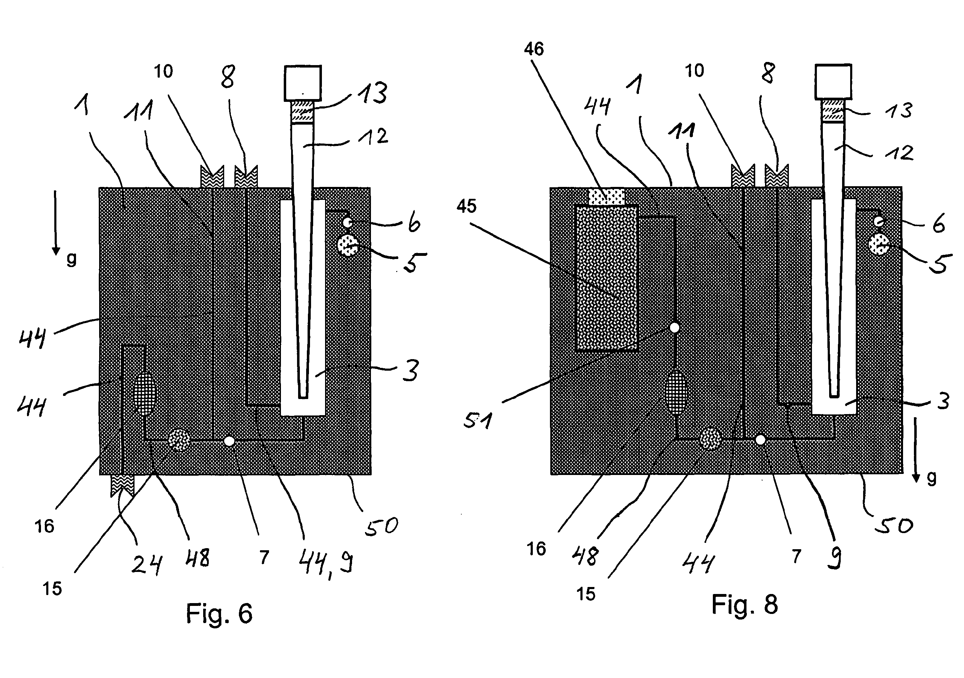

The individual steps of a typical procedure according to figure 1 with a device 1 according to figures 2 to 8, which steps are preferably performed with an apparatus 55 according to the invention, are described as follows: The example mentioned below refers to a disposable 1 and an apparatus 55 according to figures 6, 7, 10 and 11.

### Step 1: Lysis and preparation of the binding solution

The purpose of the first step in the sample preparation process is making the NA ready for binding. This may include a digestion/degradation of undesired mater, e.g. the digestion of the protein shell of a virus by a proteinase, and/or disrupting cell-walls of a bacterium by detergents. Another purpose of this step is adapting the conditions (ambient solution of the analyte) so that the analyte NA can bind to the solid phase in the following binding step (adjusting binding conditions).

The procedure of step 1 may comprise the following steps:
- Transfer of an integrated disposable 1 from an integrated disposable device delivery rack to a sample preparation station by means of a disposable device gripper 39 and an automated transfer system 36. According to a preferred embodiment of the invention the body 42 of the device 1 comprises a guidance for guiding the device 1 in the nucleic acid amplification apparatus and/or a gripping interface for gripping the device 1 by an actuation and transfer/handling means of the nucleic acid amplification apparatus in order to support this process step.
- Gripping up a sample pipetting tip 12 by a tip gripper 35 mounted on the automated transfer system 36. The sample pipetting tip is interfaced by the tip gripper 35. The tip gripper 35 is connected to an air operated sample dosing system 34.
- The sample is aspirated by the sample dosing system 34 from a sample tube 33 or other container containing the sample 32.
- The automated transfer system 36 moves then the aspirated sample in the sample pipetting tip 12 to the integrated disposable 1.
- The transfer system 36 locks then the sample pipetting tip to the lysis chamber 3 of the disposable 1.
- A sample dosing system 34 doses then the sample to the lysis chamber 3.
- Reagents 25 used for the preparation of the binding solution are successively added to the integrated disposable 1 by aspirating the reagents 25 from reagents containers 26 containing the reagents 25 and dosing them into integrated disposable 1. The reagents 25 for preparing the binding solution are added to the process using a reagent pipetting system 27 having a reagents pipetting tip 28, a reagents dosing fluid system 29 and a reagents pipetting tip wash station 30, being mounted on a automated transfer-system 36. The reagents 25 for the lysis and preparation of the binding solution are dosed to the fluid port 8 of the disposable having a fluidic connection 9 to the lysis chamber 3.
- The reagents 25 added to the sample present in the lysis chamber 3 are mixed by a sip and spit process. The sip and spit process is executed by aspirating respectively dispensing fluid from the lysis chamber 3 into the sample pipetting tip 12 respectively backwards from the sample pipetting tip 12 to the lysis chamber 3. For gas exchange of the lysis chamber 3 it has a lysis chamber venting system 4. For the sip and spit mixing the tip gripper 35 connects to the sample pipetting tip 12 and doses respectively aspirates air by means of the sample dosing system 34.
- For thermal control of the process the lysis chamber 3 is connected to a thermal control system. Heat is transferred by the heat transferring wall 41.
- For contamination control the sample pipetting tip 12 contains a tip filter 13 and the lysis chamber venting system 4 leads through a lysis chamber venting filter 5 protecting the environment from contamination respectively protecting the process from contaminations out of environment.

The following example is given for step 1:
- 25 µl QS is dosed to the lysis chamber 3 through the fluid port 8 and the fluid connection 9.
- 630 µl EDTA plasma (= sample from a patient) is pipetted by the automated transfer system 36. The sample can be spiked for control reasons with a HBV control (e.g. with 10'000 copies (=10kcp) of HBV virus e.g. from Acrometrix). For pipetting the sample pipetting tip 12 is used to aspirate the volume out of the sample tube and transfer it to the integrated disposable 1 by means of the automated transfer system 36. The sample and the QS are mixed by sip and spit mixing (2x) using the air dosing system 31.
- 65 µl Proteinase is dosed to the reaction through the fluid port 8 using the reagent pipetting system 27.
- The Proteinase is completely mixed by five sip and spit mixing steps and the reaction mix is thermostaticed to 37 °C using the thermal control system and incubated for 300 seconds.
- After this incubation 1420 µl lysis buffer is dosed through the fluid port 8 to the reaction mix and is mixed completely mix by four sip and spit mixing steps.

### Step 2: Binding

The purpose of the second step is to bring the prior prepared binding solution in contact or process it over a solid phase 14 able to bind the NA sufficiently selective and sufficiently quantitative. Inhibiting compounds present in the binding solution are either not bound or bound in negligible amounts or bound compounds are eliminated in one or several later wash steps.

The procedure may of step 2 may comprise the following steps:
- Principally all known fluid transport mechanisms are useable to process the binding solution through the binding chamber 15. Examples of such fluid transport mechanisms are:
   o Direct pumping, e.g. by a piston pressing the binding solution through the binding chamber 15.
   o Direct pumping e.g. by compressing the solution harboured in chamber by deformation of a flexible wall of the lysis chamber 3.
   o Pumping using the hydrostatic pressure caused by gravity force.
   o Pumping using hydrostatic pressure caused by centrifugal force.
   o Applying a differential pressure by applying a gas pressure on one side and/or vacuum on the other side of the system.
- Depending on the design of the system fluid paths must be switched for enabling and/or controlling the direction of fluid flows. e.g. in case of applying pressure to the binding solution a lysis chamber venting system 4 must be closed, or a flow path leading from the lysis chamber 3, through binding chamber 15, through the amplification and detection chamber 16, through the waste connector 24 and finally leading to a waste container 19 must be enabled e.g. by opening a waste valve 20.
- Supplemental means as e.g. a fluid presence sensor may control the process in respect to timing and process conformity.

The following example is given for step 2:
- The lysis chamber venting system 4 is closed by sealing of a narrow channel by thermally sealing off the channel 44 by a channel sealing equipment. A piston having a temperature of 300 °C is pressed with a force of 30 N to the channel section that has to be sealed (sealing point 6) for 15 sec.
- The connection to the waste is made by the waste connector 24.
- The waste valve 20 of the apparatus is opened.
- A tip gripper 35 connects to the sample pipetting tip 12 and pressurizes the binding solution to +1 bar (above ambient pressure).
- By the application of this differential pressure the prior prepared binding solution present in the lysis chamber 3 flows out of the lysis chamber 3 through a channel 44 located at the lower end of the lysis chamber 3, through the binding chamber 15. The binding chamber 15 harbours as solid phase 14 a disk of 5 mm diameter of a glass fibre fleece (220 g/m², quality as used in the "HighPure"-products of Roche Applied Science). The binding chamber 15 has a diameter of approx. 5 mm and a height of 1 mm. The channels 44 leading to/from the binding chamber 15 have a maximal width of 0.6 mm and height of 0.6 mm.
- The binding solution flows after the binding chamber 15 through the amplification and detection chamber 16 to the waste.
- After binding (the time is observed by a fluid presence sensor) the pressure is turned off. A typical binding time is in the range of 2 min.

### Step 3: Wash

In step 3 residues of binding solution present in the inter-space of the solid phase 14 absorber and material absorbed to the solid-phase but being dissolvable from the solid phase 14 in the wash buffer is removed, and walls of the integrated disposable 1 being contaminated by the binding solution are washed in this step.

The procedure of step 3 may comprise the following steps:
- Prior to processing (pumping) the wash buffer trough the system on the integrated disposable device 1 that has to be washed, depending on the design of this fluid system, the flow paths have to be switched for enabling and/or controlling the direction of fluid flow, e.g. the fluid path leading from the lysis chamber 3 to the binding chamber 15 has to be disabled to avoid backflow of wash buffer to the lysis chamber 3 and the flow path leading from binding chamber 15, through the amplification and detection chamber 16 and leading finally to the waste container 19 of the analysis apparatus has be enabled e.g. by opening a waste valve 20.
- The wash buffer is aspirated from a reagent container 26 containing the wash buffer and pumped through the fluid section in the integrated disposable 1 which has to be washed. For processing the wash buffer the reagent pipetting system 27 having a reagents pipetting tip 28 and a reagents dosing fluid system 29 a reagents pipetting tip wash station 30 is used. The wash buffer for washing the system that has to be processed to a fluid port 10 having a fluidic connection 11 leading to the binding chamber 15 respectively having a fluidic connection to the complete fluid system on the integrated disposable 1 that has to be washed.
- When required several wash steps with the same or with various wash buffers can be carried out.
- The wash step can be carried out under thermal control due to the connection of the integrated device to a thermal control system of the apparatus.

The following example is given for step 3:
- The channel leading from the lysis chamber 3 to the binding chamber 15 is closed by thermally sealing off the channel by a channel sealing equipment. A piston having a temperature of 300 °C is pressed with a force of 30 N towards the channel section that has to be sealed (sealing point 7) for 15 sec.
- The waste valve 20 in the apparatus is afterwards opened.
- 600 µl wash buffer are aspirated from the corresponding reagents container 26 using a reagent pipetting system 27. 500 µl are then dosed at a flow rate of 1800 µl /min to the fluid port 10. The wash buffer flows through the binding chamber 15 and the amplification and detection chamber 16 to a waste container 19 connected to the waste connector.

### Step 4: Wash-Removal / Dry

This process step 4 applies to arrangements of integrated devices and reagents 25 where the wash buffer has an inhibiting effect to the following process steps (mainly to the step of NA-detection). In these cases the wash buffer in the integrated disposable 1 has to be removed or reduced below a critical level.

The following principles alone or in combination are used for the wash buffer removal.
- Fluid mechanical displacement (e.g. by gas e.g. air or by an other neutral fluid).
- Drying off evaporable elements of the wash buffer which are know to inhibit the following process steps by means of heating and/or simultaneous pumping a gas through the section of the integrated disposable 1 wherefrom wash buffer has to be removed.
- Chemical neutralization by processing a solution through the integrated disposable 1 able to neutralize the inhibiting potential of a wash buffer.

The procedure of step 4 may comprise the following steps:
- For fluid mechanical displacement and drying off evaporable elements of the wash buffer an air dosing system 31 (or other gas) is used.
- To reduce the process time of drying off the evaporable compounds of wash buffer, the integrated disposable 1 is connected to a temperature control system allowing this step to be carried out at an elevated temperature.
- An air dosing system 31 is automatically connected to the fluid port 8 of the integrated disposable 1 which is connected to the fluid system in the device wherefrom the wash buffer has to be removed.
- The flow path leading from fluid port 10, through the binding chamber 15, through the amplification and detection chamber 16 and finally leading to a waste container 19 has to be enabled, e.g. by opening a waste valve 20.
- For fluid mechanical displacement and drying of evaporable parts of the wash buffer during a predefined process time, at predefined temperature and at a predefined pressure air is pumped through the system in the integrated disposable 1 wherefrom the wash buffer has to be removed.

The following example is given for step 4:
- An air dosing system 31 connects to the fluid port 10.
- A waste valve 20 is opened.
- The integrated disposable 1 is thermostatized to 40 °C.
- Air is dosed for 15 seconds through the device 1. The pressure of the air is +1 bar (above ambient pressure)
- After 15 seconds the temperature of the temperature control system is set to 50 °C, and held for 20 sec.
- The air dosing system 31 then pumps air having a +1 bar pressure for 120 sec. through the integrated disposable 1 wherefrom the wash buffer has to be removed, while the temperature is kept at 50 °C.

### Step 5: Elution

In step 5 the NAs (selectively and quantitatively enough) adsorbed to the solid phase 14 and washed, are eluted (i.e. solved from the solid phase) prior to the final amplification and/or detection step. For reasons of simplicity the elution is made directly with detection reagents 25 used for the following amplification and detection step. In the following context a combined [elution-buffer] + [PCR Mastermix] = "EMMx" is used for this process.

In this process step 5 the NAs are eluted (solved) from the solid phase 14 in the EMMx and transferred to the amplification and detection chamber 16.

The procedure of step 5 may comprise the following steps:
- The EMMx is dosed through the fluid port 10 to the integrated disposable 1.
- The flow path leading from fluid port 10 through the binding chamber 15, through the amplification and detection chamber 16 and finally leading to a waste container 19 has to be enabled, e.g. by opening a waste valve 20.
- For thermal control of this process the integrated device is connected to thermal control system.
- The elution step can comprise several sub steps, where the integrated device 1 is thermally controlled to a first temperature, where a first volume of EMMx is dosed to the system, where it is then incubated for a certain time and where at last a second volume is dosed.
- Typically a first volume of EMMx fills the fluidic connection 11 including the binding chamber 15 containing the solid phase 14 and after a short incubation time, a second volume is dosed to the fluidic connection 11 transferring the eluate present in the binding chamber 15 to the amplification and detection chamber 16.

The following example is given for step 5:
- The device is thermostatized by means of a thermal control system to 50 °C and held there for the whole process.
- The waste valve 20 connected to the waste connector 24 is opened.
- By means of a reagent pipetting system 27 100 µl EMMx is aspirated.
- A first volume of EMMx of 40 µl is dosed by the reagent pipetting system 27 through the fluid port 10 at a flow rate of 1200 µl/min. In this first step only the solid phase 14 is wetted by the EMMx.
- The integrated device 1 is incubated for 10 seconds
- A second volume of EMMx of 42 µl is dosed by the reagent pipetting system 27 through the fluid port 10 at a flow rate of 750 µl/min. The EMMx present in the amplification and detection chamber 16 containing the eluted NAs is transferred to the amplification and detection chamber 16.

### Step 6: Amplification and detection

After the above described, precedent process steps the analyte(s) are ready to be analyzed in step 6. To be analyzed means in this context: to be checked for the presence or absence of an analyte and/or optionally for detecting the concentration of the analyte(s).

The present invention is not limited to a distinct method of analyzing a NA. Higher amounts of analyte NA may be directly accessible to a method detecting the presence and optionally the concentration of the analyte. Lower and lowest concentrations of an analyte may require a so called "analyte amplification". For the substance class of NAs there exist several such biochemical analytical methods allowing the multiplication of the target analyte molecule or derivatives there. off. By means of these methods copies or copies of derivatives of the analyte are generated, which are then much easier to detect due to their higher concentration after this analyte amplification.

Examples of such analytical methods for analyte amplification are:
- Polymerase Chain Reaction (PCR): The complementary DNA is generated by means of a DNA-Polymerase (e.g. DNA-Polymerase form Thermus aquaticus) using thermal cycling.
- Reverse Transcription Polymerase Chain Reaction (RT-PCR): Starts form a target RNA analyte, where prior to PCR a reverse transcripted c-DNA is generated by a reverse transcription enzyme.
- Ligase Chain Reaction (LCR): In this case (complementary) copies of the analyte DNA are created by ligation of fragments of the analyte DNA using a DNA-Ligase enzyme.
- RNA-polymerisation: In this case multiple c-DNA copies of the RNA analyte are created by multiple reverse transcriptions using a Reverse Transcription Enzyme.
- Strand displacement Amplification (SDA): Using combined polymerase chain reaction and strand displacement of prior synthesized copies. Uses beside the DNA-Polymerase-Enzyme a DNA-Nicking- Enzyme to create new start points for repeated replication steps.
- Rolling cycle amplification: Using a cyclic DNA primer.
- ... any many others, as Ribo-SPIA®, LAMP, Helicase dependent PCR The use of the present invention is not limited to a distinct amplification and detection method. The amplified analyte(s) or derivative there off is either during the process of amplification or after amplification accessible to a detection method. The current invention is not limited to a distinct method of detecting the amplified NAs.

Examples of such detection methods for the amplified analyte (=amplicon) are:
- "Real-time" methods detecting the generation of amplified analyte (or derivative) during the amplification:
   o Detection of an amplicon using Taqman probes, which are specific probes being digested by the Polymerase in case of the presence of the addressed analyte forming an unquenched fluorescence.
   o Detection of an amplicon using hybridization probes, where amplicon-specific hybridization-probes hybridize to the amplicon and thereby changes a spectroscopic property.
   o Detection of amplicon using ds-DNA interchelators (e.g. Picogreen ®), where those interchelator molecules have an affinity to the formed ds-DNA amplicon and changes its spectroscopic properties in the presence of the ds-DNA.
   o Detection of amplicon using a reflexion or turbity measurement (e.g. in case of LAMP amplification where large amplicons are produced)
   o .... and many others.
- Post amplification detection methods
   o Gel electrophoresis: detecting the formed amplicon
   o Hybridization of the amplicon to immobilized probes and detecting this hybridization by appropriate means
   o ... and many others

The following example is given for step 6:
- The integrated disposable 1 is transferred to a detection station 40 comprising a thermal cycler for performing the PCR reaction and fluorescence measurement means to detect the formation of the amplicon resp. to detect the hydrolysed TaqMan® probes.
- The following thermal cycling program is executed:

| 1cycle: | | | | |
|---|---|---|---|---|
| | | 50°C | 120 sec | UNG-Step |

| 5 cycles: | | | | |
|---|---|---|---|---|
| +2.5 | °C/sec | 95°C | 15 sec | Denaturation |
| -2.0 | °C/sec | 59°C | 50 sec | Annealing & fluorescence measurement after 30 sec |

| 45 cycles: | | | | |
|---|---|---|---|---|
| +2.5 | °C/sec | 91°C | 15 sec | Denaturation |
| -2.0 | °C/sec | 52°C | 50 sec | Annealing & fluorescence measurement after 30 sec |

- In total 50 fluorescence readings are made per analysis.
- The target analyte (if present) generates fluorescence with an excitation wavelength of 485 nm (bandwidth 20 nm) and an emission at a wavelength of 525 nm (bandwidth 20 nm).
- The QS is detected with second fluorphore having the excitation wavelength of 540 nm (bandwidth 20 nm) and an emission wavelength of 575 nm (bandwidth 20 nm). For a valid result the QS has to appear to certify the overall quality of the process and reagents 25 (internal quality standard). Superior the QS can by used for quantification calculations of the analyte.
- After analysis the integrated disposable 1 is discharged or unloaded or post PCR processed when required (e.g. for genotyping).

### Step 7: Result generation

In step 7 the signal measured in the detection step is converted to an information which is useful to the user, e.g. to a health status information (e.g. a viral load of a patient).

The following example is given for step 7:
- All crude data (e.g. fluorescence data) received from the detection means are post-processed by an automated system (computer).
- The QS curve is examined to conformity. This is done by comparison of the QS curve with an expected QS curve. Alternatively derivated characteristics of the curve may be used, e.g. the amount of signal formed at the end of the analysis and the "elbow-value", i.e. the cycle in which the fluorescence has reached a predefined relative fluorescence signal (e.g. 15% of the final fluorescence signal). A non conform QS signal may be used to detect non conform analysis.
- The target "elbow-value" is calculated. The elbow value is generally related to the concentration.
- From a corresponding calibration curve or reference data the concentration of the analyte is then calculated and reported to a user.

According to the invention the process steps of a nucleic acid analysis, which are preferably performed with a disposable device 1, are preferably performed with an apparatus 55 according to the invention which is described as follows. The apparatus 55 comprises the required features for interacting with an embodiment disposable 1 described above and for operating and processing a disposable 1 inserted into the apparatus 55 for performing a nucleic acid analysis.

Two basic concepts can be realized each in two different embodiments of such an apparatus. The first concept is directed to the question whether the disposable 1 comprises a waste connector 24 or whether the disposable 1 has an integrated waste chamber 45. In specific embodiments also an integrated waste chamber 45 may be provided in addition to a waste connector 24. In the figures 9 to 11 only embodiments wherein a waste connector 24 is comprised are illustrated. Of course, they can be amended correspondingly if a waste chamber 45 is comprised on the disposables 1 used.

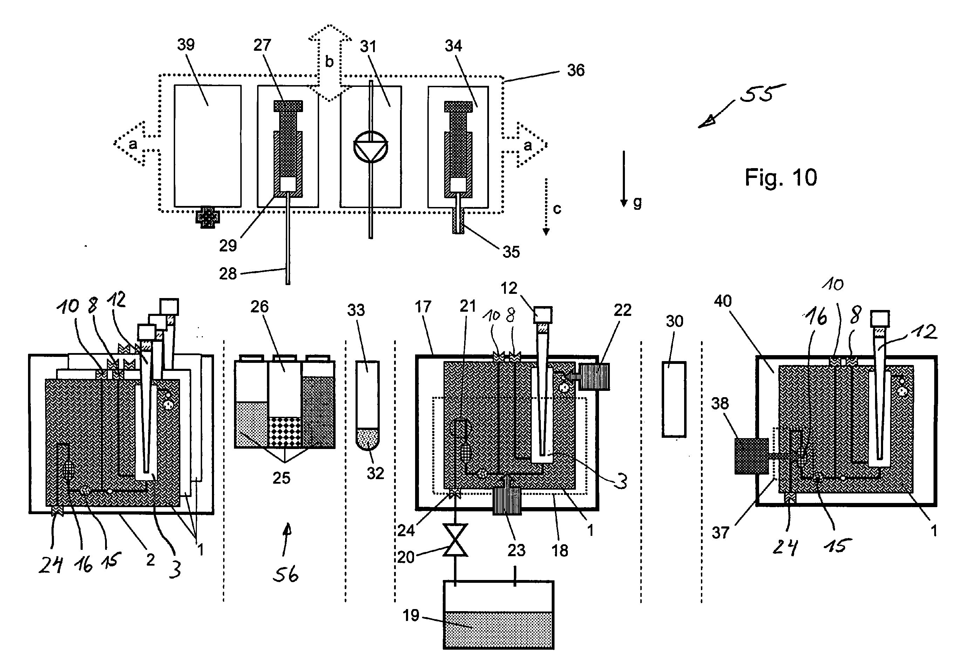

The second concept is directed to the feature whether a lysis chamber 3 is comprised on the disposable 1 (see e.g. figures 6 to 8), in which case the lysis is performed with the sample 32 on the disposable 1, or whether the disposable does not comprise a lysis chamber 3 (see e.g. figures 2 to 5), in which case the lysis is performed external of the disposable 1 and the prepared lysis mixtured is then transported to the disposable 1 by the apparatus 55 to the disposable 1 with a disposable processing tip 47. The first alternative is illustrated in figure 10 and the second in figure 9.

Individual elements of an apparatus 55 illustrated in figures 9 and 10 are described as follows.

If more than one integrated disposable device 1 has to be loaded to an apparatus 55 performing an automated analysis using these integrated disposables 1, the integrated disposables 1 are provided on a disposable delivery rack 2 holding several of those integrated disposables 1. Used integrated disposables 1 may be reloaded back to this rack 2 and may get then discharged from there.

The sample preparation station 17 is a workstation on the apparatus 55, which supports the process with all required resources and means. For example, for mechanically holding the integrated disposable 1, the sample preparation station 17 contains holders for the device 1. For thermal control of the nucleic acid analysis process the sample preparation station 17 contains a thermal control system 18. For surveillance of the process the station 17 may contain means as a fluid presence sensor 21. For controlling fluid flow the station may contain actuators switching, opening or closing fluid paths (e.g. channel sealing equipment). For fluidic processing the station may provide fluid connectors, e.g. waste connector 24.

The resources and features required do not have to be necessarily all unified in one single sample preparation station 17. In other embodiments also different kinds of sample preparation stations 17 can be used, where each kind of station only may provide only a portion of all required resources. In this case a transfer of the integrated disposables 1 between the various workstations is required. Where required there may also be several such stations 17 working in parallel in order to increase the throughput of the apparatus 55.

The thermal control system 18 allows thermal control of the nucleic acid analysis process in the apparatus 55. Typically the thermal control system 18 comprises a heater (and/or optionally a cooler) having a heat transfer block or surface, a temperature sensor and a control unit for regulation of the temperature.

The waste container 19 is a container where the waste flows in from the waste connector 24, particularly with embodiments of devices 1 not comprising an integrated waste chamber 45. The waste valve 20 is a valve in the fluidic connection between the integrated disposable 1 and the waste container 19.

The fluid presence sensor 21 is a sensor which is able to detect the presence /absence of a fluid (gas or liquid) in a channel 44 or a chamber, e.g. the lysis chamber 3, the binding chamber 15 or the detection and amplification chamber 16.

In order to inhibit the flow through an open channel 44, the channel 44 may be closed by thermally sealing off the channel 44 by means of a venting channel sealing equipment 22 or a channel sealing equipment 23. For closing channels 44 the channels 44 may be sealed thermally. For this purpose at sealing point of the channel 44 a section in the channel is with increased temperature compressed and deformed thereby such that the open fluid path is closed and the walls of the channel 44 are sealed together. The channel sealing equipment 22, 23 comprises preferably a heated piston which is regulated to temperature between 200 and 400 °C, most preferred between 250 to 350 °C, and a mechanical movement actuator which is able to press the piston towards the sealing point on the integrated disposable 1. The path length of actuation is typically in the range of 0.1 to 20 mm, more preferred in a range of 0.2 to 3 mm. The force used and exerted to the channel 44 for sealing is preferably in a range of 1 to 100 N, most preferred in range of 2 to 20 N. The piston may preferably have an active sealing area between 0.5 and 10 mm², most preferred from 1 to 3 mm².

Reagents 25 are chemicals, as solvents or solutions or dry reagents, which are to be used in the nucleic acid analysis in the apparatus 55. Such reagents 25 can be for example: Diluters, digesting agent (e.g. proteinase or lysing buffers), conditioners (e.g. for adjusting binding conditions), wash-buffers for cleaning a solid-phase, standards (e.g. to be used as internal process control or for quantitation), detection reagents, etc. The reagent containers 26 are vessels containing a reagent 25. A reagent container 26 may also contain empty compartments, where it is possible to perform certain process steps therein e.g. premix or dissolve or activate reagents 25. The reagent container 26 may contain the reagents 25 for a single run/device/assay, or for several runs (e.g. for 96 devices/assays). The reagent container 26 may be sealed with a foil which is piercable, e.g. by a tip. There may also be several reagent containers 26 storing reagents 25 used for all analysis, e.g. water, or a generic washbuffer. Single dose reagent containers 26 are preferred for apparatuses 55 with low throughput.

The reagent containers 26 form a reagent station preferably comprising all reagents 25 required for performing the nucleic acid analysis of the sample 32. The reagents 25 can be provided in reagent-sets. The reagents 25 can be comprised in corresponding reagent containers 26 for one performing one or multiple analyses. However, reagents 26 can also be comprised on a disposable 1, e.g. in a corresponding reagent chamber integrated in the disposable 1.

The reagent pipetting system 27 is a system used to dose a required reagent 25, generally by aspirating the reagent 25 from a reagent container 26 and dispensing it to the place where the reagent 25 is used. The reagent pipetting system 27 comprises reagent dosing fluid system 29 and a reagents pipetting tip 28 by which the reagent 25 is aspirated respectively dispensed. The reagents pipetting tip 28 may be an elongated hollow needle which is able to pick up a reagent 25 from a reagent container 26 and applying it to the place where the reagent 25 is used. A reagents dosing fluid system 29 may be comprised which is a system able to aspirate respectively dispense a defined volume of reagent 25. Typically a motor driven syringe is used, operating with a system fluid. For washing of the reagents pipetting tip 28 a reagents pipetting tip wash station 30 is comprised which is a station where the reagent needle can be washed after a pipetting step.

The air dosing system 31 is a system which is able to deliver air (or an other gas e.g. purified nitrogen) to a point of request. The air dosing system 31 may deliver gas with constant pressure, various pressures and/or a predefined gas-volume. The air dosing system 31 may need in a case where air is used an air filter. For applying the gas to the element and point of application requested a connecting element which is able to interface to the point of application is required.

The sample 32 contains (potentially) the nucleic acid to be detected or quantified by use of the apparatus 55 with a device 1. For automated apparatuses 55 the sample 32 has generally to be pipettable. The sample 32 is preferably contained in a vessel, the sample tube 33. For aspirating respectively dispensing a defined volume of sample 32 or air a sample dosing system 34 may be provided which typically may use an air displacement syringe pump.

The tip gripper 35 is able to pickup, connect and place back the disposable tip 12. The tip gripper 35 is the interface of the apparatus 55, between the sample pipetting tip 12 and the sample dosing system 34.

The automated transfer system and means 36 are means used for automated manipulation-steps, e.g. allocation of apparatus means (e.g. tip gripper 35, air and reagent dosing system 31, 29) and of disposables, e.g. integrated disposables 1, and sample pipetting tips 12. The automated transfer means 36 include transfer elements as e.g. transfer arms and/or conveyor belts and/or linear or rotary movable tables, drives, guidings and a control-system. The automated transfer system 36 may also contain means for controlling the automated movements (e.g. a computer or processor). The automated transfer means 36 can, e.g., move the disposables 1 within the apparatus 55 with a suitable actuator for handling the disposable sample holding and processing devices 1, provide mixing of fluids (by sip and spit actions), eject fluids (reagents 25 or gases) into a disposable 1 or remove it therefrom and may have means for pipetting a sample 32, e.g. by using a disposable or non-disposable tip 12.

The means moved by the transfer means 36 may be a tip gripper 35, a disposable gripper 39 or a reagents pipetting tip 28. In cases in which the disposables are not placed manually in the detection station 40 the transfer means 36 comprise at least one disposable transfer means, i.e. the disposable gripper 39, for handling the disposable devices 1. The transfer means 36 may be moved, depending on the specific embodiment of the apparatus 55 and/or the specific action performed by it during an analysis, in one or several of the following manners: linear in a horizontal direction, linear in vertical direction, two-dimensional in a horizontal plane, two-dimensional in a vertical plane, in three dimensions (preferably by movements in three linear directions) or rotationally in two or three dimensions.

The thermal cycler 37 is a temperature control means which is used for thermal control, especially for cases wherein the method of PCR is used for NAT, and for thermal cycling of the liquid present in the amplification and detection chamber 16.

The fluorescence measurement means 38 is a means which is used to detect a fluorescence signal formed in the amplification and detection chamber 16, which signal is correlated to the presence/concentration of a the analyte to be analyzed.

The disposable gripper 39 is a gripper able to pick an integrated disposable 1, e.g. electrically or pneumatically actuated, and place it back.

The detection station 40 of the apparatus 55 is for receiving and holding one or multiple disposable devices 1 and preferably contains all means to perform the analysis and detection step of the nucleic analysis process. It provides a mechanical means for holding the integrated disposable 1. In case of PCR this station contains a thermal cycler 37 and for isothermal detection NAT methods means for controlling the temperature are provided. For the measurement of a physical or chemical state correlating to the presence (supplemental to the concentration) of an analyte, the detection station 40 contains detection means for recognition of the chemical or physical state correlated toe the presence/concentration of the analyte. Such means can be in the case of PCR using TaqMan probes or hybridization probes = fluorescence measurement means 38. When the sample preparation (lysis) is performed on the disposable 1 the required processing means are provided at the detection station 40, e.g. a thermo control and fluid interfaces and connections for performing the sample preparation.

In specific embodiments of an apparatus 55 also several detection stations 40 and/or several sample preparation stations 17 may be comprised, e.g. for performing individual and specific steps at a specific station or for processing several devices 1 in parallel at corresponding stations. In embodiments in which a station performs only a part of the corresponding processing step the disposables 1 however have to be transported from one station to another in order to run through all the required processing steps. Further, in a preferred embodiment, a processing station 40 is located at the same place in the apparatus 55 as a sample preparation station 17. In such an embodiment the disposables 1 do not have to be transported from the sample preparation station 17 to the processing station 40 but can be kept in place after preparation of the sample for performing the analysis. With other words expressed the functions of the sample preparation station 17 and the processing station 40 are unified in a single station (called processing station 40). Such an embodiment may be advantageous with respect to the reliability or throughput of the apparatus 55.

One or several disposable processing tips 47 may be used in a single nucleic acid analysis. The tip 47 has two interfaces: an upper interface, to interface and form a tight junction with the pipetting system (tip gripper 35) and a lower interface to interface and form a tight junction with the disposable processing device 1 at the fluid port 11 at the disposable device 1. The disposable tip 47 has inner volume in a range of 100 µl to 5,000 µl, more preferred in a range of 200 µl to 2,500 µl. The tip 47 is generally made out of at least one inert material, e.g. PP. The lower interface of the tip 47 is a section of low outer diameter to connect to the interface of the disposable device 1. If the interface is a septum the lower interface of the disposable device is designed to interface this septum (e.g. to pierce the septum). In this case the lower end of the disposable tip 47 may be made of a second material, e.g. steel, and be a narrow tube. The disposable processing tip 47 is able to aspirate and dose reagents 25, sample 32 and mixes of reagents 25 with sample 32 (binding solution).

Figures 9 and 10 show two embodiments of an apparatus 55 with the transfer means 36, which is designed to handle a sample transfer tip 12 or a disposable processing tip 47, and also optionally the disposable devices 1. Therefore, the transfer means 36 comprises a tip gripper 35 and optionally (not shown here, see figure 10) a disposable gripper 39. Generally, when operated, said gripping device of the transfer means 36 grips into a corresponding gripping mould of the element to be grabbed. The transfer means 36 can be moved in the horizontal direction a to be positioned above the device to be transferred, which might be the disposable devices 1 or the disposable processing tip 47.

The process of gripping the disposable device 1 from the processing devices storing rack 2, transporting it vertically upwards, moving it horizontally and inserting vertically downwards into the sample preparation station 17 (or a detection station 40) by the transfer means 36 is not illustrated in figure 9 (because in the embodiment of an apparatus 55 according to figure 9 the apparatus 55 is manually loaded). In other embodiments, e.g. in cases in which the apparatus 55 is used at low throughput sites (e.g. up to 20 analyses per day), the disposable 1 may be loaded to the preparation station 17 (or the detection station 40) manually by an operator.

Furthermore, said transfer means 36 may be constructed as or may comprise an actuation head acting as actuation means, which actuation head is automatically movable horizontally in one or two directions, as indicated by the arrows a.

Furthermore, the actuation head may be automatically movable in a vertical direction, as indicated by the arrows b in figures 9 and 10, permitting to parallel operating at least one of the actuation means which are comprised in the actuating head. Generally, these actuation means might be for example the following: Means for providing pressure or vacuum in order to "aspirate" or "sip" a desired amount of the sample 32 from a sample tube 33 via a sample dosing system 34 in a sample transfer tip 12, and to dose said sample 32 from the sample tip 12 in the disposable processing device 1, when desired. The sample transfer tip 12 is transferable containing the sample as long as the vacuum is maintained.

Supply with reagents 25 may be performed analogously using the reagent pipetting system 27 which is arranged in the actuation head, too, and which may communicate with a reagent container 26 due to the horizontal and vertical operability of the actuation head which houses the reagent pipetting system 27. The reagent pipetting system 27 may comprise a reagent dosing fluid system 29 and a reagent pipetting tip 28 by which the reagent 25 is aspirated or, respectively, dispensed. The dispenser can be an elongated hollow needle which is designed for reagent up-taking from a reagent container 26, e.g., and dispensing said reagent 25 into the reaction chamber of interest.

As figure 10 shows, further pressure providing means, which may also be designed additionally or alternatively as a volumetric air dosing system 31, are located in the actuation head, communicating with the disposable gripper 39 in order to aspirate and dose resp. pressurize any device 1 connected to the disposable gripper 39. The disposable gripper 39 is operated electrically or pneumatically to pick up and release any device 1 the disposable gripper 39 is connected to. The required pressure might be generated pneumatically or hydraulically, to name two options exemplarily. The air dosing system 31, which may be arranged in the actuation head, too, can serve as pressure means, too.

Other means to be arranged in the actuation head might be means to provide temperature control, heat supply or heat removal from the process or the sample 32 or reagents 25. Means such as temperature controller are not being illustrated herein. The operating of the actuation head might be fully automated.

As further indicated by figure 10, the device 1 is inserted into a sample preparation station 17 or a detection station 40 such that it is received into a receptacle, from which it might be removed easily when the process is terminated.

Generally, the apparatus 55 of the embodiments of the present invention comprises additionally temperature control means 37 for heating or cooling of a sample 32 and process control means 67 for controlling the process of nucleic acid analysis in the apparatus 55, i.e. the sample preparation, the handling of the disposable devices 1 and reagents 25 and the sample analysis which is performed by the apparatus 55.

Figure 10 also illustrates phases referring to an embodiment of the automatic apparatus 55 for performing nucleic acid sample preparation and analysis, such as polymerase chain reaction. The processing of the disposables 1 stored in disposables rack 2 comprises handling one disposable 1 with the transfer means 36, filling it with sample 32 and reagents 25 from the reagents station 56, performing the sample preparation in the sample preparation station 17 and analyzing the sample in the disposable 1 in the detection station 40, wherein the sample preparation station 17 and the detection station 40 may be identical stations, i.e. one station at the same place providing the functions of both of these stations.

The automated apparatus 55 according to the herein described embodiment comprises a plurality of sample transfer tips 12 and disposable devices 1, both of which devices being fluidic devices housing a fluidic system and being designed to perform nucleic acid testing comprising the steps of lysis, capturing, amplification and detection within said disposable device 1. Generally, the step of lysis does not necessarily have to be performed within the disposable device 1; it might be performed in an external device (see e.g. figure 9) prior to perform the process of binding, amplification and detection.

The apparatus has a detection station 40, which receives and holds the disposable devices 1. Generally, a plurality of said disposable devices 1 may be inserted into said sample processing station 40 in order to be processed. It is most advantageous that said plurality of samples can be processed simultaneously. The processing devices 1 are stored in a processing devices rack 2 until needed.

Advantageously, the above detection station 40 of the apparatus 55 of the embodiments of the present invention might additionally comprise fittings for guiding and holding the disposable device 1, with the fittings being designed to enable vertical inserting and removing of the disposable device 1 into and from the detection station 40 by the actuation means, i.e. the transfer means 36.

The sample 32, which is intended to be subjected to the aforesaid process, is stored and provided in a sample tube 33 until needed. Other sample providing devices than sample tubes 33 might be used. One may use sample transfer tips 12 in order to transfer a sample 32 from said sample providing device to the place where it will be processed. Other sample transfer means can be used if they are suitable with respect to the geometrical requirements of the sample tube 33, the disposable device 1 and the actuation head, which is depicted below. In other embodiments, e.g. for cases in which the apparatus 55 is used at low throughput sites (e.g. up to 20 analyses per day), the sample or a prelysed sample may be loaded to the integrated disposable manually by an operator.

Figure 10 additionally outlines how the disposable device 1 is supplied with said sample 32 and with reagents 25: The lysis chamber 3 comprises an opening adapted to receive a sample transfer tip 12 for transferring a sample 32 into the disposable device 1. Furthermore, the disposable device 1 comprises two fluid inlet ports 8, 10 adapted to provide a fluidic communication between said fluid system of the disposable device 1 and external fluid sources; one of the fluid inlet ports being a fluid port 8, wherein a fluid might be one of a gas such as air, a reagent 25 or a sample 32, since the sample 32 does not necessarily have to be injected into the disposable device 1 via the sample tip 12. Said fluid port 8 is connected to the inlet of the lysis chamber 3 via a channel 44. Said second fluid inlet port is a reagent inlet port 10, being connected to the inlet of the binding chamber 15.

It must be taken into consideration that the reagent 25, which might be injected via said reagent inlet port, might be an active compound needed to perform a chemical reaction within the disposable device 1, or it might be an eluent or a washing detergent or any other reagent.

The external fluid sources herein are the sample tube 33, which generally fluidically communicates via the sample tip 12 and the opening of the disposable device 1 with the fluid system, and the reagent container 26 which fluidically communicates via the fluid inlet port 8 or via the reagent inlet port 10 with the fluid system of the disposable device 1, using the actuation head, see figure 10. The actuation means being comprised in the actuation head might be operated as described above, carrying out horizontal and vertical movements. A desired amount of the sample 32 is taken up from a sample tube 33 via a sample dosing system 34, which is comprised in the actuation head, and aspirated by a sample transfer tip 12, or, respectively, a reagent 25 is taken up using the reagent pipetting system 27, comprised in the actuation head, too, which communicates with the reagent container 26. Then, the reagent 25 is released into the disposable device 1 via the inlet port 19, flowing via the channel 44 into the lysis chamber 3 then.

The sample 32 is released into the disposable device 1 via said opening in which the sample tip 12 is inserted. The mixing of the sample 32 and the reagent 25 starts. Since taking up and release of the fluids is pressure driven, one may optimize mixing and thus, obtain a homogenized mixture of the reagent 25 and the sample 32 in that the mixture is sipped again into the sample tip 12 and then it is spit back into the disposable device 1. Sipping and spitting may be performed repeatedly until the desired homogeneity of the mixture is obtained. The mixing can be carried out using the air dosing system 31, which is arranged in the actuation head and which may generate a needed pressure or vacuum.

During or after the process is completed, the fluid processed in the disposable device 1 is released via outlet 24, which is connected to the fluid system of the disposable device 1, more precisely to the outlet of the amplification chamber 16. The fluid release port, i.e. the waste connector 24, may lead via a waste valve 20 into a waste container 19 (see figure 10). Alternatively the waste can be supplied to an integrated waste chamber (see figure 9).

Said fluid inlet port 8, said reagent inlet port 10 and said waste connector 24 are arranged vertically, so that the inflowing fluid and the released fluid flows downwards when said disposable device 1 is operated in the sample preparation station 17 or said detection station 40. The reagent inlet port 10 and the fluid port 8 are arranged to communicate with the fluid actuation means of the apparatus, so that the actuation means is adapted to provide fluid supply and fluid removal of the disposable device 1 in a vertical direction of flow in said inlet ports 8, 10.

The apparatus of the embodiments of the present invention may comprise additionally containers to store fluids needed to conduct the process. Therefore a reagent container 26 is provided, adapted to receive the reagent containers 26. The transfer means 36 are positionable directly above said reagent container 26 in order to take up reagents. Therefore, the actuation head is operated as outlined above.

The plurality of reagent containers 26 might be stored in a container rack or reagent container station, respectively, not being illustrated herein. Accordingly, the uptake of reagent 25 is performed by positioning the fluid actuation means above a corresponding or selected container 26 being placed in said reagent container station and by subsequent operating of the actuation head.

Furthermore, the apparatus according to an embodiment of the present invention may comprise a sample rack, which sample rack is adapted to receive the plurality of sample tubes 33. The sample transfer means 36 such as the sample transfer tip 12 might be filled with the sample 32 by taking up the sample 32 from the tube, using a pressure drive sipping mechanism. Then, the sample transfer tip 12 is transferred into the disposable device 1 being positioned in sample preparation station 17 (or the detection station 40). In order to grip the sample transfer tip 12 for transfer purposes, the transfer means 36 may comprise a tip gripper 35 which is adapted to automatically grip the sample transfer tip 12 and place it in the disposable processing device 1, which is positioned in the detection station 40.

After all, the apparatus of the embodiments of the present invention may be equipped with a fluid filling measuring device adapted to measure the filling of the fluid system of the disposable processing device placed in the disposable detection station 40. The fluid filling measuring device is not illustrated figuratively. Advantageously, the fluid filling measuring device is located close to the outlet of said amplification chamber 16, preferably close to or in a channel 44 connected to the outlet of said amplification chamber 16. The fluid filling measurement may be performed optically, requiring an optical sensor then.

In order to perform filling or evacuation or, respectively, ventilation, the amplification chamber 16 has an inlet and an outlet, which are advantageously arranged such that carry-over or substance transferring from one process to another is prevented. The optical measurement window is provided in the amplification chamber 16 such that the measurement direction from the measurement window 53 to an optical sensor of the apparatus 55 is horizontal.

Another option is the installation of an electrical sensor which might be arranged close to the outlet channel 44, thus downstream to the amplification chamber 16. Using the described sensors helps indicating precisely the filling state of the fluidic system or, of the amplification chamber 16, if the sensor is installed directly at the amplification chamber outlet.

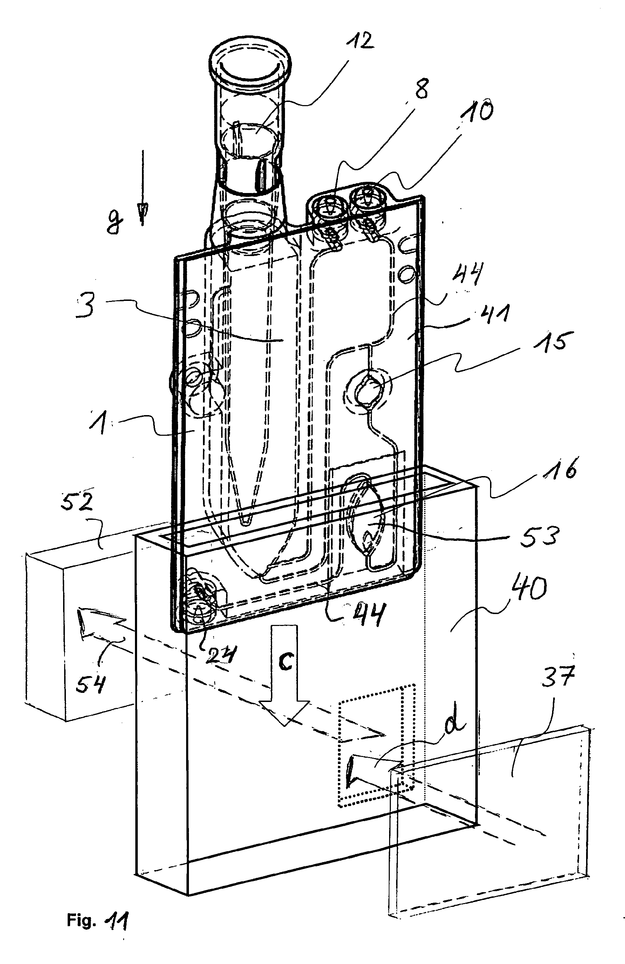

The apparatus 55 according to embodiments of the present invention comprises detection means. Such detection means are illustrated in figure 11. An optical detector 52 is provided for measuring an optical parameter of the sample 32 through an optical measurement window 53. This optical measurement window 53 is provided in the amplification chamber 16 of the disposable device 1, which amplification chamber 16 comprises the sample 32 or, respectively, the amplified components of interest. During the optical analysis, the disposable device 1 is being inserted in the detection station 40. Figure 11 furthermore indicates the inserting of a disposable 1 into the processing station 40 in a direction indicated by the arrow c. A combined disposable device results, when the sample transfer tip 12 is inserted into the disposable device 1.

The optical detector 52 is positioned in a way that the measurement direction from the measurement window 53 to the optical detector 52 is horizontal. Accordingly, the light path 54 stands perpendicular on said optical measurement window and on the side-surface 50 of the disposable device 1. Generally, the optical detector 52 might be designed to receive light or electromagnetic energy, in particular caused by fluorescence effects which occur when a fluorescence marker being present in the amplification chamber emits fluorescent radiation. Said detector may also be combined with an energy source as electromagnetic energy emitting element, e.g., to excite the molecules of interest which are comprised in the amplification chamber 16. Then, the optical measurement arrangement comprising the fluid in the amplification chamber 16, the optical window 53, the optical detector 52 and an energy source or, respectively, light source, could be arranged such that transmission measurements might be carried out.

Figure 11 shows the subunit detection station 40 of the apparatus 55, together with a disposable device 1 (semi inserted). The detection station 40 comprises a temperature control means 37 which is adapted to control heating and/or cooling of a fluid present in the amplification and detection chamber 16 by a thermal conduction between the temperature control means 37 and the amplification chamber 16, when the disposable device 1 is inserted in the detection station 40, as indicated by the arrow c. The direction of heat flow between the temperature control means 37 and the amplification chamber is perpendicular with regard to the side-surface 50 of the disposable processing device, indicated by the arrow d. Figure 11 points out that the optical detector 52 and the temperature control means 37 are arranged on opposite sides of the amplification chamber 16. This arrangement is advantageous in case of having temperature control of the fluid present in the amplification and detection chamber 16 on one side and at the same time being able to detect an optical phenomena (as fluorescence, a color or color intensity change, or a turbidity change or a change of a direction of polarization) related to the concentration resp. presence or absence of an analyte.

For carrying out optical detection, one might advantageously design at least one wall of the amplification chamber 16 such that a sufficient optical transparency is given, by providing an optical measurement window 53, e.g., in the amplification chamber. According to a preferred embodiment, the optical sensor may be arranged opposite to the optical window 53 of the amplification chamber 16.

Such a preferred embodiment is shown in figure 11; herein, the disposable device 1 has a heat transfer wall 41 at its plane backside, whereas the optical window 53 of the amplification chamber 16 is at the front side of said disposable device 1 and, thus, the heat transfer wall 41 and the optical window 53 are arranged on opposite sides of the amplification chamber 16.

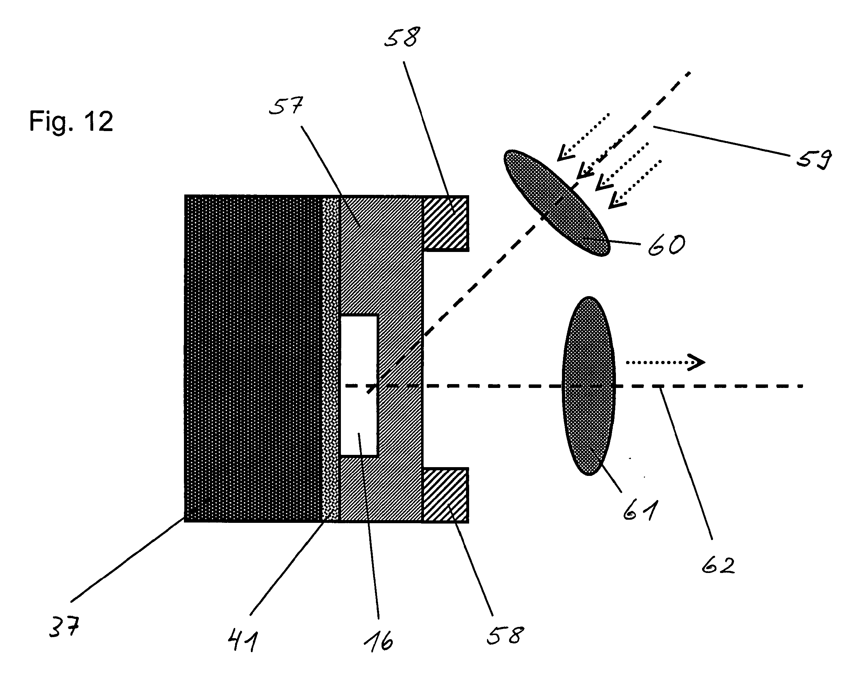

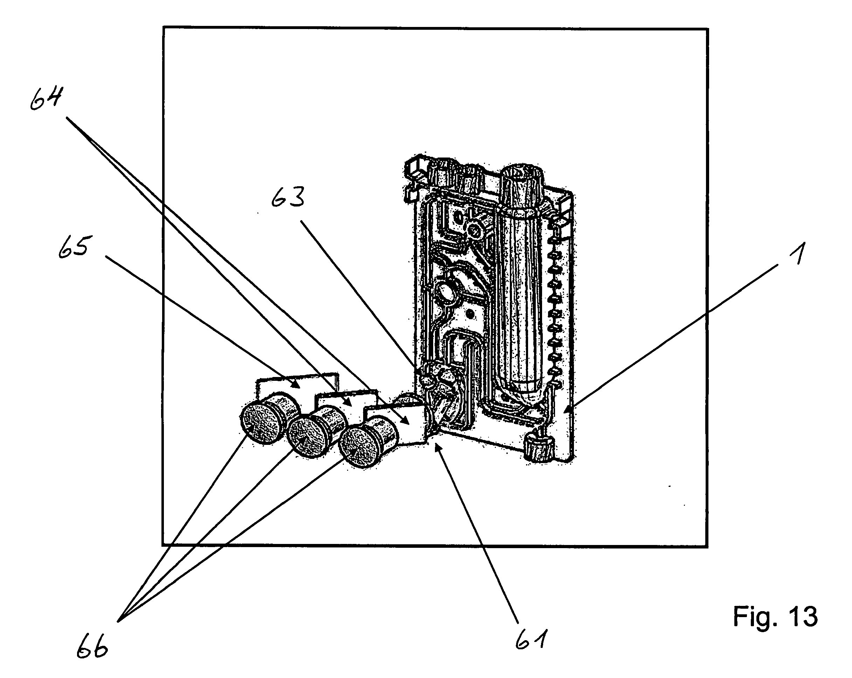

Figure 12 and 13 show details of the detection means of figure 11. The individual elements are as follows. Disposable device support 57, clamping mechanism 58, fluorescence excitation axis 59, lens in the excitation light path 60, lens in the detection light path 61, detection axis 62, fluorescence excitation lens 63, dichroic beam splitters 64, mirror 65 and (three) fluorescence-(photo)-detectors 66 (for measuring brightness a various wavelengths).

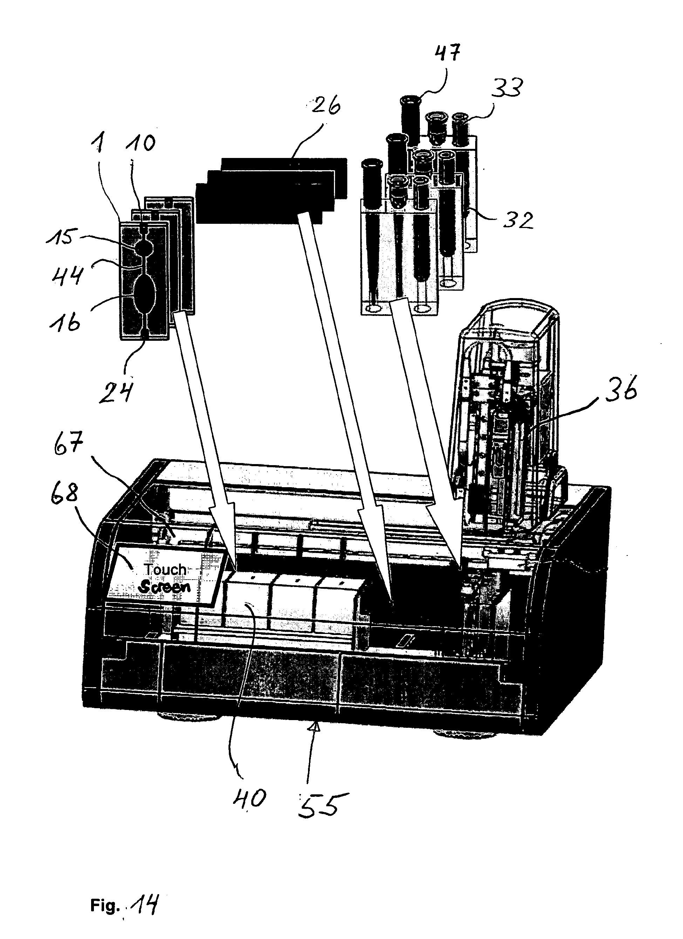

Figure 14 shows an overall perspective view of an apparatus 55 according to an embodiment of the invention. In this embodiment an alternative embodiment of a disposable device 1 is illustrated. The disposable device 1 comprises a binding chamber 15 and an amplification chamber 16 which are connected by a channel 44 and part of a fluidic system. Further a fluid inlet port 8 and a waste connector 24 is provided. The disposable 1 can be placed and processed in the apparatus in a vertical position, wherein the binding chamber 15, the amplification chamber 16 and the channel 44 are located in a vertical side-surface 50 of the device 1.

For automated operation of the apparatus 55 the apparatus 55 includes process control means 67. Such control means 67 are able to control the apparatus 55 according to a program. The control means 67 may use a micro-controller, a computer, or programmed logic elements for the execution of a program. The control means 67 executes and controls the program by successive or simultaneous execution of steps of the analysis process. The control means 67 has generally output leads to control actors (e.g. transfer means 36, pumps, etc.) and input leads to recognition of states of the apparatus 55 (or the devices 1). Of course these control means 67 may also include a user interface 68 with inputs and outputs towards a user of the apparatus 55.

After all, a system is claimed which comprises the apparatus 55 and a disposable processing device 1. Further a method for analyzing a liquid sample containing a nucleic acid with a nucleic acid amplification technique by using such a system is claimed.

### Reference numerals

- 1: integrated disposable processing device
- 2: disposables rack
- 3: lysis chamber
- 4: lysis chamber venting system
- 5: lysis chamber venting filter
- 6: venting sealing point
- 7: closing sealing point
- 8: fluid port A
- 9: fluid connection A
- 10: fluid port B
- 11: fluid connection B
- 12: sample transfer tip
- 13: tip filter
- 14: solid phase
- 15: binding chamber
- 16: amplification and detection chamber
- 17: sample preparation station
- 18: thermal control system
- 19: waste container
- 20: waste valve
- 21: fluid presence sensor
- 22: venting channel sealing equipment
- 23: channel sealing equipment
- 24: waste connector
- 25: reagents
- 26: reagents container
- 27: reagent pipetting system
- 28: reagents pipetting tip
- 29: reagents dosing fluid system
- 30: reagents pipetting tip wash station
- 31: air dosing system
- 32: sample
- 33: sample tube
- 34: sample dosing system
- 35: tip gripper
- 36: automated transfer means
- 37: thermal cycler
- 38: fluorescence measurement means
- 39: disposable gripper
- 40: detection station
- 41: heat transferring wall
- 42: body
- 43: sealing zone
- 44: channels
- 45: integrated waste chamber
- 46: waste chamber ventilation
- 47: disposable processing tip
- 48: channel 15-16
- 49: venting port
- 50: side-surface
- 51: waste chamber sealing point
- 52: optical detector
- 53: optical window
- 54: light path
- 55: apparatus
- 56: reagents station
- 57: disposable device support
- 58: clamping mechanism
- 59: excitation axis
- 60: lens in the excitation light path
- 61: lens in the detection light path
- 62: detection axis
- 63: fluorescence excitation lens
- 64: dichroic beam splitters
- 65: mirror
- 66: fluorescence-(photo)-detectors
- 67: process control means
- 68: user interface
- a: arrow indicating horizontal movement
- b: arrow indicating vertical movement
- c: arrow indicating inserting
- d: arrow indicating heat flow
- g: gravity

## Claims

1. An automatic apparatus (55) for performing nucleic acid sample analysis by using disposable sample holding and processing devices (1) with the apparatus (55), said apparatus (55) comprising:
- a detection station (40) for receiving and holding at least one disposable device (1),
- at least one reagents station (56) for comprising at least one reagent (25) to be used in the nucleic acid sample preparation and/or analysis process,
- at least one transfer means (36) for performing movements of an actuator of the apparatus within the apparatus (55),
- at least one fluid actuation means for processing the sample (32) and reagents (25) in said disposable devices (1),
- at least one temperature control means (37) for heating or cooling of the disposable (1) or the sample (32),
- detection means for measuring a property of the processed samples (32), and
- process control means (67) for controlling the sample (32) preparation, the handling of the disposable devices (1) and the sample analysis performed by the apparatus (55),
wherein
- the disposable device (1) is a fluidic device comprising a fluidic system designed for nucleic acid testing, comprising the steps of capturing, amplification and detection within said disposable device (1),
- the fluid actuation means comprise at least one of a means for transport and manipulation of fluid in the disposable (1),
and wherein
- the disposable device (1) comprises a binding chamber (15) containing a solid phase (14) for solid phase extraction of a component of the sample (32) to be analyzed, an amplification chamber (16) and a fluid channel (48) connecting the amplification chamber (16) to the binding chamber (15),
- and the disposable device (1) comprises at least one fluid interface (8, 10) for interacting with the fluid actuation means, said fluid interface providing fluid to the disposable (1) in a vertical direction of flow when the disposable device (1) is operated in the apparatus (55), in particular a sample preparation station (17) or the detection station (40).

2. Apparatus (55) according to claim 1, wherein the device (1) comprises a rigid body (42).

3. Apparatus (55) according to any one of the preceding claims, wherein the binding chamber (15) and the amplification chamber (16) of the disposable device (1) are situated on side-surfaces of the body (42), each of those side-surfaces, on which the binding chamber (15) or the amplification chamber (16) is situated, is covered by at least one wall (41) and these side-surfaces are substantially vertical (g) planes when the device (1) is operated in the nucleic acid amplification apparatus (55), in particular in a sample preparation station (17) or in the detection station (40).

4. Apparatus (55) according to any one of the preceding claims, wherein the device (1) comprises at least one fluid interface to be connected to the fluid actuation means of the apparatus (55), the fluid interface being connected by a fluid channel (44) to at least one chamber of the device (1), preferably to one of the binding chamber (15) and the amplification chamber (16), wherein the fluid interfaces are situated on top- and/or bottom-surfaces of the body (42) when the device (1) is operated in the nucleic acid amplification apparatus (55).

5. Apparatus (55) according to any one of the preceding claims, wherein the apparatus (55) comprises a sample preparation station (17) for performing the step of lysis of the nucleic acid in a sample (32).

6. Apparatus (55) according to the preceding claim, wherein the step of lysis is performed external of the disposable (1) and wherein the transfer means (36) is designed to transport the prepared sample from the sample preparation station (17) to a disposable in a detection station (40) for performing the nucleic acid analysis.

7. Apparatus (55) according to any one of the two preceding claims, wherein the processing station (40) is located at the same place in the apparatus (55) as the sample preparation station (17) such that the disposables (1) do not have to be transported from the sample preparation station (17) to the processing station (40) but can be kept in place after preparation of the sample (32) for performing the analysis.

8. Apparatus (55) according to any one of the preceding claims, wherein the apparatus (55) is designed to perform also the step of lysis of the nucleic acid sample preparation and analysis within the disposable device (1).

9. Apparatus (55) according to any one of the preceding claims, wherein a lysis chamber (3) is comprised within the disposable device (1), which lysis chamber (3) is adapted for performing lysis of the nucleic acid in a sample (32).

10. Apparatus (55) according to any one of the preceding claims, wherein a sample transfer tip (12) is provided which is adapted to receive a sample (32) and to transfer said sample (3) into said disposable device (1).

11. Apparatus (55) according to the preceding claim, wherein the transfer means (36) comprise a tip gripper (35), said tip gripper (35) being adapted to automatically grip a sample tip (12, 48) adapted to place said sample tip (12) into said disposable device (1) being positioned in the detection station (40).

12. Apparatus (55) according to any one of the preceding claims, wherein the detection station (40) comprises fittings for guiding and holding the disposable devices (1), wherein said fittings are designed to enable vertical inserting and removing of the disposable device (1) into and from the detection station (40) by the transfer means (36).

13. Apparatus (55) according to any one of the preceding claims, wherein the disposable device (1) comprises at least one fluid inlet port (8, 10) adapted to provide fluidic communication between said fluidic system of the disposable device (1) and an actuation means for supplying fluid into the fluidic system of said disposable device (1), and the apparatus (55) comprises a corresponding fluid actuation means.

14. Apparatus (55) according to any one of the preceding claims, wherein the disposable device (1) comprises at least one waste connector (24) which is in fluidic communication with the fluidic system of the disposable device (1), and the apparatus (55) comprises a corresponding fluid actuation means.

15. Apparatus (55) according to the preceding claim, wherein the at least one fluid inlet port (8, 10) and said at least one waste connector (24) of the disposable device (1) are arranged in vertical direction of flow, said at least one fluid inlet port (8, 10) being adapted to communicate with the fluid actuation means of the apparatus (55).

16. Apparatus (55) according to any one of the preceding claims, comprising at least one transfer means (36) which comprises a gripping device for inserting the disposable device (1) to be analyzed into a receptacle of the detection station (40) and for removing the disposable device after processing and analysis.

17. Apparatus (55) according to any one of the preceding claims, wherein the apparatus (55) provides to a disposable device (1) placed in the apparatus (55), in particular in a sample preparation station (17) or the detection station (40), at least one of pressure, vacuum, pneumatic or hydraulic pressure, temperature control, heat supply, heat removal, uptake and release of a sample (32) or of a fluid.

18. Apparatus (55) according to any one of the preceding claims, wherein the fluid actuation means is adapted to provide fluid supply and fluid removal into or from the disposable device (1) in a vertical direction of flow in said disposable device (1), the disposable device (1) being operated in said apparatus (55), in particular a sample preparation station (17) or the detection station (40), said fluid preferably being a sample (32) or a reagent (25) or a mixture of sample (32) and reagents (25).

19. Apparatus (55) according to any one of the preceding claims, wherein the device comprises at least one sealing point (6, 7, 51) located close to a channel (44) of the device (1), said channel leading from a chamber of the device to an inlet port, outlet port or venting port of the device, or from a first chamber to a second chamber, wherein the channel located close to the sealing point can be sealed by a sealer of the apparatus (55) in order to close said channel for interrupting a flow of liquid or gas through said channel, and the apparatus (55) comprises a corresponding channel sealing equipment (23) for closing the sealing point (6, 7, 51).

20. Apparatus (55) according to any one of the preceding claims, wherein the detection means comprise an optical detector (52) for measuring an optical parameter of the liquid in the amplification and detection chamber (16) through an optical measurement window (53) which is provided in the amplification chamber (16) of the disposable device (1), said disposable device (1) being operated in the detection station (40).

21. Apparatus (55) according to the preceding claim, wherein the optical detector (52) is arranged such that a measurement direction from the measurement window (53) to the optical detector (52) is horizontal.

22. Apparatus (55) according to any one of the preceding claims, wherein the temperature control means (37) is adapted to provide heating and/or cooling of a liquid by a thermal conduction between the temperature control means (37) and the amplification chamber (16), said liquid being comprised in the amplification chamber (16) of said disposable device (1), said disposable device being operated in the detection station (40), wherein an effective direction of heat flow between the temperature control means (37) and the amplification chamber (16) is horizontal.

23. Apparatus (55) according to the two preceding claims, wherein the optical detector (52) and the temperature control means (37) are arranged on opposite sides of the amplification chamber (16) and wherein the measurement direction from the measurement window (53) to the optical detector (52) is the same as the effective direction of heat flow from the temperature control means (37) to the amplification chamber (16).

24. Apparatus (55) according to any one of the preceding claims, wherein the transfer means (36) comprise an actuation head, said actuation head being automatically movable horizontally in only one or in two directions, whereby said transfer means (36) is positioned above one of the disposable devices (1), the sample (32) and/or a reagent container (26), and wherein said actuation head is automatically movable in a vertical direction, with at least one of a means for providing pressure or vacuum, pneumatic or hydraulic pressure, temperature control, heat supply, heat removal, uptake and release of a sample (32) or of a fluid being actuated.

25. Apparatus (55) according to any one of the preceding claims, wherein the apparatus (55) comprises a reagent container station (56) for receiving reagent containers (26) and wherein the fluid actuation means is designed to automatically take up a reagent volume from a corresponding reagent container (26) being placed in said reagent container station (56) and to release said reagent volume via an at least one fluid inlet port (8, 10) into the disposable device (1), said disposable device (1) being placed in the apparatus (55), in particular a sample preparation station (17) or the detection station (40).

26. Apparatus (55) according to any one of the preceding claims, wherein the apparatus (55) comprises at least one sample rack, which sample rack is adapted to receive at least one sample providing device, in particular a sample tube (33), and at least one sample transfer tip (12) adapted for sample uptake from the sample tube (33) and being adapted to transfer said sample (32) from the sample tube (33) via an opening into the disposable device (1) being positioned in the detection station (40).

27. Apparatus (55) according to any one of the preceding claims, wherein the apparatus (55) or the disposable (1) comprises a fluid filling measuring means adapted to measure the filling of the fluidic system of the disposable device (1), in particular adapted to measure the maximum filling of the amplification chamber (16), said fluid filling measuring means being positioned in the disposable detection station (40).

28. Apparatus (55) according to the preceding claim, wherein the amplification chamber (16) has an outlet and wherein an outlet channel (44) is connected to said outlet, and wherein the fluid filling measuring means is arranged in said outlet channel of the amplification chamber (16) close to the outlet of the amplification chamber (16) being adapted to detect the maximum filling of the amplification chamber (16).

29. Apparatus (55) according to any one of the two preceding claims, wherein the fluidic filling measurement means comprises one of
- an optical measurement window (53) enabling optical detection of fluid in the outlet channel (44) by a corresponding optical sensor of the apparatus (55), and
- an electric sensor placed in or close to the outlet channel (44) enabling detection of fluid in the outlet channel (44).

30. System comprising an apparatus (55) according to any one of the preceding claims and disposable devices (1) as described in any one of the preceding claims.

31. Method for analyzing a liquid sample containing a nucleic acid with a nucleic acid amplification technique by using a system according to the preceding claim.
